(19) Europäisches Patentamt
European Patent Office
Office européen des brevets

(11) Veröffentlichungsnummer: **0 256 407 B1**

# (12) EUROPÄISCHE PATENTSCHRIFT

(45) Veröffentlichungstag der Patentschrift: **06.03.91**

(21) Anmeldenummer: **87111169.6**

(22) Anmeldetag: **03.08.87**

(51) Int. Cl.5: **A01N 43/86**, A01N 43/78, A01N 57/36, A01N 57/02, A01N 53/00, A01N 47/34, A01N 47/24, A01N 47/22, A01N 47/18, A01N 47/12, A01N 43/88, //(A01N43/86, 43:32,37:38,37:02,31:14), (A01N43/78,43:32,37:38,37:02, 31:14),(A01N57/36,43:86,43:78), (A01N57/02,43:86,43:78), (A01N53/00,43:86),A01N43:78

## (54) Insektizide Mittel.

(30) Priorität: **13.08.86 JP 188636/86**
**13.08.86 JP 188637/86**
**13.08.86 JP 188638/86**
**13.08.86 JP 188639/86**

(43) Veröffentlichungstag der Anmeldung:
**24.02.88 Patentblatt 88/08**

(45) Bekanntmachung des Hinweises auf die Patenterteilung:
**06.03.91 Patentblatt 91/10**

(84) Benannte Vertragsstaaten:
**AT BE CH DE ES FR GB GR IT LI NL**

(73) Patentinhaber: **NIHON TOKUSHU NOYAKU SEIZO K.K.**
**Itohpia Nihonbashi Honcho Building 7-1, Nihonbashi Honcho 2-chome**
**Chuo-ku Tokyo 103(JP)**

(72) Erfinder: **Tsuboi, Shinichi**
**3-26-1, Hirayama**
**Hino-shi Tokyo(JP)**
Erfinder: **Sasaki, Shoko**
**1-7-3, Higashi-Hirayama**
**Hino-shi Tokyo(JP)**
Erfinder: **Hattori, Yumi**
**598, Kobiki-cho**
**Hachioji-shi Tokyo(JP)**

EP 0 256 407 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

(56) Entgegenhaltungen:
**JP-A-86 178 981**
**JP-A-86 178 982**

**CHEMICAL ABSTRACTS, Band 106, Nr. 5, 2. Februar 1987, Seite 169, Zusammenfassung Nr. 28848p, Columbus, Ohio, US; & EP-A-192 060 (NIHON TOKUSHU NOYAKU SEIZO K.K.) 27-08-1986**

(74) Vertreter: **Schumacher, Günter, Dr. et al**
**c/o Bayer AG Konzernverwaltung RP Patentabteilung**
**W-5090 Leverkusen 1 Bayerwerk(DE)**

## Beschreibung

Die vorliegende Erfindung betrifft neue insektizide, synergistische, Wirkstoff-Kombinationen bekannter Nitromethylen-Derivate und bekannter Insektizide.

Nitromethylen-Derivate und ihre Verwendung als Insektizide sind bereits offenbart (siehe dazu die JP-Patentanmeldungen Nr. 18627/1985 und 18628/1985).

Es ist bereits bekannt, daß die folgenden Verbindungen eine starke insektizide Wirksamkeit besitzen: S,S'-2-Dimethylaminotrimethylen-bis(thiocarbamat), N,N-Dimethyl-1,2,3-trithian-4-ylamin, 2-t-Butylimino-3-isopropyl-5-phenyl-1,3,5-thiadiazinan-4-on und 1-(4-Chlorophenyl)-3-(2,6-difluorobenzoyl)harnstoff (The Pesticide Manual, 7. Auflage, 1983, veröffentlicht von dem British Crop Protection Council), N-(2,6-Difluorobenzoyl)-N'-[3,5-dichloro-4-(3-chloro-5-trifluoromethyl-2-pyridyloxy)phenyl]harnstoff (JP-Patentveröffentlichung 53786/1982) sowie 3-Phenoxybenzyl-2-(4-ethoxyphenyl)-2-methylpropylether (JP-OS 72928/1982).

Die Wirkungen dieser bekannten insektiziden Verbindungen sind jedoch nicht in vollem Umfang zufriedenstellend, insbesondere dann nicht, wenn die Konzentrationen dieser Wirkstoffe niedrig sind und wenn sie nur in kleinen Mengen eingesetzt werden.

Es ist weiterhin bereits bekannt, daß die folgenden Carbonsäureester eine starke insektizide Wirksamkeit aufweisen:
α-Cyano-5-phenoxy-4-fluorobenzyl-3-(2,2-dichlorovinyl)-2,2-dimethylcyclopropancarboxylat (JP-Patentveröffentlichung 57025/1982), (RS)-α-Cyano-3-phenoxybenzyl(Z)-(1RS,3RS)-3-(2-chloro-3,3,3-trifluoropropenyl)-2,2-dimethylcyclopropancarboxylat, (RS)-α-Cyano-3-phenoxybenzyl-2,2,3,3-tetramethylcyclopropancarboxylat, (RS)-α-Cyano-3-phenoxybenzyl-(RS)-2-(4-chlorophenyl)-3-methylbutyrat und α-Cyano-3-phenoxybenzyl-l-p-ethoxyphenyl-2,2-dichlorocyclopropan-1-carboxylat (siehe The Pesticide Manual, 7. Auflage, 1983, veröffentlicht von dem British Crop Protection Council).

Die Wirkungen dieser bekannten insektiziden Verbindungen sind jedoch nicht in vollem Umfang zufriedenstellend, insbesondere dann nicht, wenn ihre Konzentrationen als Wirkstoffe niedrig sind oder wenn sie nur in kleinen Mengen eingesetzt werden.

Es ist weiterhin bereits bekannt, daß die folgenden Carbamate eine starke insektizide Wirksamkeit aufweisen:
2-Isopropoxyphenyl-methylcarbamat, 2-sec-Butylphenylmethylcarbamat, m-Tolyl-methylcarbamat, 3,4-Xylylmethylcarbamat, 2,3-Dihydro-2,2-dimethylbenzofuran-7-yl-methylcarbamat, α-Ethylthio-o-tolyl-methylcarbamat und 2-Dimethylamino-5,6-dimethylcarbamat [siehe The Pesticide Manual, 7. Auflage, 1983 (veröffentlicht von dem British Crop Protection Council)].

Die Wirkungen dieser bekannten Carbamate sind jedoch nicht im notwendigen Maße zufriedenstellend, wenn ihre Konzentrationen niedrig sind oder wenn sie nur in kleinen Mengen eingesetzt werden. Darüber hinaus haben als Folge der mehrjährigen Anwendung dieser Insektizide einige Insekten gegen einige dieser Insektizide Resistenz erworben, und es ist sehr schwierig geworden, diese Insekten zu bekämpfen und unter Kontrolle zu halten.

Es ist weiterhin bereits bekannt, daß beispielsweise die folgenden Organophosphatester eine starke insektizide Wirksamkeit aufweisen:
O-Ethyl-O-4-methylthiophenyl-S-propyl-phosphorodithioat,
O-2,4-Dichlorophenyl-O-ethyl-S-propyl-phosphorodithioat,
O,O-Diethyl-O-5-phenylisoxazol-3-yl-phosphorothioat,
2,3-Dihydro-3-oxo-2-phenyl-6-pyridazinyl-diethyl-phosphorothioat,
O,S-Dimethyl-acetylphosphoramidothioat,
O,O-Diethyl-S-2-ethylthioethyl-phosphorodithioat und
O,O-Dimethyl-S-2-(1-methylcarbamoylethylthio)ethyl-phosphorothioat (siehe The Pesticide Manual, 7. Auflage, 1983, veröffentlicht von dem British Crop Protection Council).

Die Wirkungen dieser bekannten Organophosphate sind jedoch nicht im notwendigen Maße zufriedenstellend, wenn ihre Konzentrationen niedrig sind oder wenn sie nur in kleinen Mengen eingesetzt werden. Weiterhin haben als Folge der mehrjährigen Anwendung dieser Insektizide einige Insekten gegen einige dieser Chemikalien Resistenz erworben, und es ist sehr schwierig geworden, diese Insekten zu bekämpfen und unter Kontrolle zu halten.

Es wurde gefunden, daß neue Wirkstoff-Kombinationen aus

(1) einem Nitromethylen-Derivat der Formel (I)

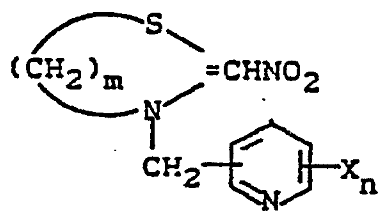

(I)

in der

X ein Halogen-Atom, eine Alkyl-Gruppe oder eine Alkoxy-Gruppe bezeichnet,
n 0, 1 oder 2 bezeichnet und
m 2 oder 3 bezeichnet,

und

wenigstens einer aus den folgenden Gruppen (2) bis (5) ausgewählten insektiziden Verbindung eine besonders hohe insektizide Aktivität besitzen:

(2) Gruppe der Insektizide bestehend aus
S,S'-2-Dimethylaminotrimethylen-bis(thiocarbamat), N,N-Dimethyl-1,2,3-trithian-5-ylamin, 2-t-Butylimino-3-isopropyl-5-phenyl-1,3,5-thiadiazinan-4-on, 1-(4-Chlorophenyl)-3-(2,6-difluorobenzoyl)-harnstoff, N-(2,6-Difluorobenzoyl-N'-[3,5-dichloro-4-(3-chloro-5-trifluoromethyl-2-pyridyloxy)phenyl]harnstoff, 3-Phenoxybenzyl-2-(4-ethoxyphenyl)-2-methylpropylether, 1-(4-Trifluoromethoxyphenyl)-3-(2-chlorobenzoyl)harnstoff, 1-[4-(2-Dichloro-1-difluoroethoxy)phenyl]-3-(2-chlorobenzoyl)harnstoff, und 1-(2,4-Difluoro-3,5-dichlorophenyl)-3-(2,6-difluorobenzoyl)harnstoff;

(3) Gruppe der Carbonsäureester der folgenden Formel

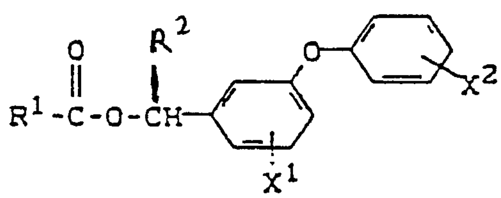

(II)

(4) Gruppe der Carbamate der folgenden Formel

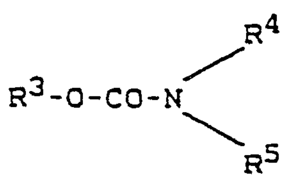

(III)

(5) Gruppe der Organophosphatester der folgenden Formel

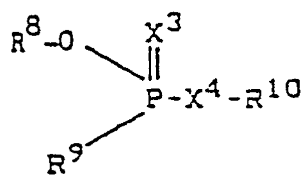

(IV)

in der

$X^3$ ein Sauerstoff- oder Schwefel-Atom bezeichnet,

$X^4$ ein Sauerstoff- oder Schwefel-Atom bezeichnet.

Überraschenderweise ist die insektizide Wirksamkeit der Wirkstoff-Kombinationen gemäß der Erfindung wesentlich größer als die Summe der Effekte der einzelnen aktiven Substanzen. Demgemäß liegt eine echte synergistische Wirkung vor.

Durch die Anwendung der erfindungsgemäßen Wirkstoff-Kombinationen kann man eine kooperative und synergistische Wirkung gegen Reisfeld-Schädlinge wie Wanzen der Ordnung Hemiptera (z.B. Weißrücken-Laternenträger) und Reisblattwickler der Ordnung Lepidoptera sowie Schädlinge an Garten-Nutzpflanzen, darunter auch Früchten und Gemüse, wie Kohlschaben, Kohlmotten bzw. Schleiermotten der Ordnung Lepidoptera mit niedrigeren Konzentrationen als denjenigen erzielen, in denen die Wirkstoffe einzeln zur Anwendung kommen, und weiterhin läßt sich eine Rückstandswirkung nachweisen.

Aus diesem Grunde bietet die insektizide Wirkstoff-Kombination der vorliegenden Erfindung einen technischen Vorteil, der sehr wirkungsvoll beim Anbau land- und gartenwirtschaftlicher Nutzpflanzen und von herausragender wirtschaftlicher Nützlichkeit und Anwendbarkeit ist.

Die in den erfindungsgemäßen Wirkstoff-Kombinationen verwendeten Nitromethylen-Derivate der allgemeinen Formel (I) sind durch die folgende Formel definiert

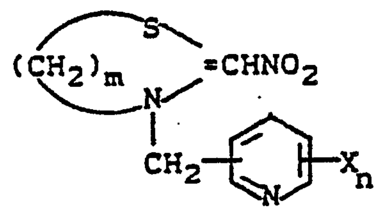

(I)

in der

X ein Halogen-Atom, eine Alkyl-Gruppe oder eine Alkoxy-Gruppe bezeichnet,

n 0, 1 oder 2 bezeichnet und

m 2 oder 3 bezeichnet.

In der Formel (I) bezeichnen vorzugsweise X ein Chlor-Atom, ein Brom-Atom oder ein Fluor-Atom, n 1 oder 2 und m 2 oder 3, und die Bindungs-Position an dem Pyridin-Ring ist die 3- (oder 5-) -Stellung.

Zu Beispielen für die Nitromethylen-Derivate der Formel (I), die in der erfindungsgemäßen aktiven Substanz-Kombination verwendet werden zählen u. a.

3-(3-Pyridylmethyl)-2-(nitromethylen)thiazolidin,
3-(2-Chloro-5-pyridylmethyl)-2-(nitromethylen)thiazolidin,
3-(2-Chloro-5-pyridylmethyl)-2-(nitromethylen)tetrahydro-2H-1,3-thiazin,
3-(2-Bromo-5-pyridylmethyl)-2-(nitromethylen)thiazolidin,
3-(2-Bromo-5-pyridylmethyl)-2-(nitromethylen)tetrahydro-2H-1,3-thiazin,
3-(2-Fluoro-5-pyridylmethyl)-2-(nitromethylen)thiazolidin,
3-(2-Fluoro-5-pyridylmethyl)-2-(nitromethylen)tetrahydro-2H-1,3-thiazin,
3-(2,4-Dichloro-5-pyridylmethyl)-2-(nitromethylen)-tetrahydro-2H-1,3-thiazin,
3-(2-Methyl-5-pyridylmethyl)-2-(nitromethylen)thiazolidin,
3-(2-Methyl-5-pyridylmethyl)-2-(nitromethylen)tetrahydro-2H-1,3-thiazin,
3-(2-Methoxy-5-pyridylmethyl)-2-(nitromethylen)tetrahydro-2H-1,3-thiazin.

Die insektizide Wirksamkeit der Nitromethylen-Derivate der allgemeinen Formel (I) ist in den JP-Patentanmeldungen 18627/1985 und 18628/1985 beschrieben.

Beispiele für die bekannten Insektizide der aus der vorstehenden Gruppe (2) ausgewählten anderen Insektizide sind die folgenden:

S,S'-2-Dimethylaminotrimethylen-bis(thiocarbamat) (Cartap),
N,N-Dimethyl-1,2,3-trithian-5-ylamin (Thiocyclam),
2-t-Butylimino-3-isopropyl-5-phenyl-1,3,5-thiadiazinan-4-on (Buprofezin),
1-(4-Chlorophenyl)-3-(2,6-difluorobenzoyl)harnstoff (Diflubenzuron)
(The Pesticide Manual, 7. Auflage, 1983, veröffentlicht von dem British Crop Protection Council).
N-(2,6-Difluorobenzoyl-N'-[3,5-dichloro-4-(3-chloro-5-trifluoromethyl-2-pyridyloxy)phenyl]harnstoff (JP-Patentveröffentlichung 53786 (1982) und
3-Phenoxybenzyl-2-(4-ethoxyphenyl)-2-methylpropylether (JP-OS 72928/1982).

Carbonsäureester (Gruppe (3)) der Formel (II), die in den erfindungsgemäßen Wirkstoff-Kombinationen eingesetzt werden, sind diejenigen Verbindungen der Formel (II), in denen

$R^1$ eine Alkyl-Gruppe bezeichnet, die durch eine Phenyl-Gruppe substituiert ist, die ihrerseits durch einen

aus Halogen-Atomen, Niederalkoxy-Gruppen und Niederhalogenoalkoxy-Gruppen ausgewählten Substituenten substituiert ist, und wobei die Alkyl-Gruppe weiter durch eine Dichlorocyclopropan-Gruppe substituiert sein kann, oder

$R^1$ eine Alkyl-Gruppe bezeichnet, die durch eine Phenylamino-Gruppe substituiert ist, die ihrerseits durch ein Halogen-Atom und eine Halogenoalkyl-Gruppe substituiert sein kann, wobei die Halogenoalkyl-Gruppe vorzugsweise eine Trifluoromethyl-Gruppe ist, oder

$R^1$ eine Cyclopropyl-Gruppe, die durch eine Alkyl-Gruppe mit 1 bis 3 Kohlenstoff-Atomen, vorzugsweise eine Methyl-Gruppe, substituiert ist, oder eine Halogenoalkenyl-Gruppe mit 2 bis 3 Kohlenstoff-Atomen bezeichnet,

$R^2$ ein Wasserstoff-Atom oder CN bezeichnet und

$X^1$ und $X^2$ jeweils ein Wasserstoff-Atom, ein Chlor-Atom oder ein Fluor-Atom bezeichnen, wobei vorzugsweise $X^1$ ein Wasserstoff- oder Fluor-Atom bezeichnet und $X^2$ ein Wasserstoff-Atom bezeichnet.

Zu Beispielen der Carbonsäureester der allgemeinen Formel (II) zählen u.a.:

α-Cyano-5-phenoxy-4-fluorobenzyl-3-(2,2-dichlorovinyl)-2,2-dimethylcyclopropancarboxylat (Cyfluthrin),
3-Phenoxybenzyl-(1RS,3RS;1RS,3SR)-3-(2,2-dichlorovinyl)-2,2-dimethylcyclopropancarboxylat (Permethrin),
(RS)-α-Cyano-3-phenoxybenzyl-(1RS;3RS;1RS;3SR)-3-(2,2-dichloro-vinyl)-2,2-dimethylcyclopropancarboxylat (Cypermethrin),
(S)-α-Cyano-3-phenoxybenzyl-(1R,3R)-3-(2,2-dibromovinyl)-2,2-dimethylcyclopropancarboxylat (Deltamethrin),
(RS)-α-Cyano-3-phenoxybenzyl(Z)-(1RS,3RS)-3-(2-chloro-3,3,3-trifluoropropenyl)-2,2-dimethylcyclopropancarboxylat (Cyhalothrin),
(RS)-α-Cyano-3-phenoxybenzyl-2,2,3,3-tetramethylcyclopropancarboxylat (Fenpropathrin),
(RS)-α-Cyano-3-phenoxybenzyl-(RS)-2-(4-chlorophenyl)-3-methylbutyrat (Fenvalerate),
(RS)-α-Cyano-3-phenoxybenzyl-(S)-2-(4-difluoromethoxyphenyl)-3-methylbutyrat (Flucythrinate),
α-Cyano-3-phenoxybenzyl-1-p-ethoxyphenyl-2,2-dichlorocyclopropan-1-carboxylat und
(RS)-α-Cyano-3-phenoxybenzyl-N-(2-chloro-α,α,α-trifluoro-p-tolyl)-D-valinat (Fluvalinate).

Die Carbonsäureester als eine Komponente der erfindungsgemäßen Wirkstoff-Kombinationen sind bereits bekannt. Beispielsweise sind sie als Insektizide in The Pesticide Manual, 7. Auflage, 1983, veröffentlicht von dem British Crop Protection Council, beschrieben.

Carbamate (Gruppe (4)) sind diejenigen Verbindungen der Formel (III), in denen

$R^3$ eine Phenyl-Gruppe bezeichnet, die durch eine oder zwei gleiche oder verschiedene Alkyl-Gruppen, Alkoxy-Gruppen mit 1 bis 4 Kohlenstoff-Atomen oder Ethylthiomethyl-Gruppen substituiert ist, oder

$R^3$ eine Naphthyl-Gruppe, eine Pyrimidinyl-Gruppe, die durch eine Dialkylamino-Gruppe mit 1 bis 3 Kohlenstoff-Atomen, vorzugsweise eine Dimethylamino-Gruppe, und zwei Alkyl-Gruppen mit 1 bis 4 Kohlenstoff-Atomen, vorzugsweise Methyl-Gruppen, substituiert ist, oder eine 2,3-Dihydrobenzofuranyl- oder Benzodioxolyl-Gruppe, die durch eine Alkyl-Gruppe mit 1 bis 4 Kohlenstoff-Atomen, vorzugsweise eine Methyl-Gruppe, substituiert ist, bezeichnet oder

$R^3$ eine Gruppe der allgemeinen Formel

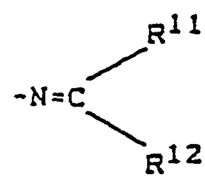

bezeichnet, in der

$R^{11}$ eine Alkyl-Gruppe mit 1 bis 4 Kohlenstoff-Atomen, vorzugsweise eine Methyl-Gruppe, bezeichnet und

$R^{12}$ eine Alkylthio-Gruppe mit 1 bis 4 Kohlenstoff-Atomen, vorzugsweise eine Methylthio-Gruppe, bezeichnet,

$R^4$ ein Wasserstoff-Atom oder eine Alkyl-Gruppe mit 1 bis 4 Kohlenstoff-Atomen bezeichnet, wobei die Alkyl-Gruppe $R^4$ mit 1 bis 4 Kohlenstoff-Atomen vorzugsweise Methyl bezeichnet, und

$R^5$ eine Alkyl-Gruppe mit 1 bis 4 Kohlenstoff-Atomen, vorzugsweise eine Methyl-Gruppe, oder eine Gruppe der Formel

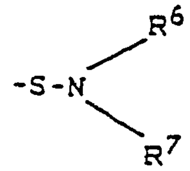

bezeichnet, in der

$R^6$ für eine Alkyl-Gruppe mit 1 bis 5 Kohlenstoff-Atomen steht und

$R^7$ für eine Alkyl-Gruppe, eine Alkoxycarbonyl-Gruppe oder eine Alkoxycarbonylalkyl-Gruppe steht, die jeweils 1 bis 5 Kohlenstoff-Atome im Alkylteil haben.

Zu Beispielen für die Carbamate der allgemeinen Formel (III) zählen 2-Isopropoxyphenylmethylcarbamat (Propoxur),
o-Cumenylmethylcarbamat (Isoprocarb),
2-sec-Butylphenylmethylcarbamat (BPMC),
3,4-Xylylmethylcarbamat (Xylylcarb),
m-Tolylmethylcarbamat (Metolcarb),
3,5-Xylylmethylcarbamat (XMC),
α-Ethylthio-o-tolylmethylcarbamat (Ethiofencarb),
1-Naphthylmethylcarbamat (Carbaryl),
2-Dimethylamino-5,6-dimethylpyrimidin-4-yl-dimethyl-carbamat (Pirimicarb),
2,2-Dimethyl-1,3-benzodioxol-4-ylmethylcarbamat (Bendiocarb),
2,3-Dihydro-2,2-dimethylbenzofuran-7-ylmethylcarbamat (Carbofuran),
Butyl-2,3-dihydro-2,2-dimethylbenzofuran-7-yl-N,N-dimethyl-N,N-thiodicarbamat (Furanthiocarb),
2,3-Dihydro-2,2-dimethylbenzofuran-7-yl-(dibutylaminosulfenyl)(methyl)carbamat (Carbosulfan) (siehe die JP-Patentveröffentlichung 39487/1983),
2,3-Dihydro-2,2-dimethylbenzofuran-7-yl-N-(N-isopropyl-N-ethoxycarbonylethylaminosulfenyl)-N-methylcarbamat (Aminosulfulan) (siehe die JP-OS 200377/1982) und
S-Methyl-N-(methylcarbamoyloxy)thioacetimidat (Methomyl).

Die als eine Komponente der erfindungsgemäßen Wirkstoff-Kombinationen eingesetzten Carbamate sind bereits bekannt. Beispielsweise sind sie in The Pesticide Manual, 7. Auflage, 1983, veröffentlicht von dem British Crop Protection Council, beschrieben.

Organophosphatester (Gruppe (5)) sind diejenigen Verbindungen der Formel (IV), in denen

$R^8$ eine Alkyl-Gruppe mit 1 bis 4 Kohlenstoff-Atomen bezeichnet,

$R^9$ eine Alkoxy-Gruppe, eine Alkylthio-Gruppe oder eine Alkylcarbonylamid-Gruppe, die jeweils 1 bis 4 Kohlenstoff-Atome im Alkyl- bzw. Alkoxyteil umfassen, bezeichnet,

$R^{10}$ eine durch einen oder zwei aus Halogen-Atomen und Methyl-, Methylthio-, Nitro- und Cyano-Gruppen ausgewählte Substituenten substituierte Phenyl-Gruppe bezeichnet oder

$R^{10}$ eine Alkyl-Gruppe mit 1 bis 3 Kohlenstoff-Atomen bezeichnet, die gegebenenfalls durch ein Halogen-Atom, eine Alkylthio- (oder -sulfinyl-) -Gruppe mit 2 bis 3 Kohlenstoff-Atomen, eine Phenyl-Gruppe, eine Alkoxycarbonyl-Gruppe mit 1 bis 4 Kohlenstoff-Atomen, im Alkyl- bzw Alkoxyteil eine Alkylcarbamoyl-Gruppe mit 1 bis 4 Kohlenstoff-Atomen im Alkyl bzw Alkoxyteil, eine Alkylcarbamoylalkyl $(C_{1-2})$-thioalkyl-$(C_{1-2})$-Gruppe oder eine Alkoxycarbonyl-N-methylcarbamoyl-Gruppe mit 1 bis 4 Kohlenstoff-Atomen im Alkyl bzw. Alkoxyteil, eine halogen-substituierte Benzoxazol-Gruppe oder eine Alkyl-Gruppe mit 1 bis 2 Kohlenstoff-Atomen, die durch ein Halogen-Atom und eine Phthalimid-Gruppe substituiert ist, substituiert sein kann, oder

$R^{10}$ eine Alkenyl-Gruppe mit 2 bis 3 Kohlenstoff-Atomen bezeichnet, die durch ein oder zwei aus Halogen-Atomen, einer halogen-substituierten Phenyl-Gruppe und einer Alkylcarbamoyl-Gruppe ausgewählte Substituenten substituiert ist, oder

$R^{10}$ eine Pyridinyl-, Pyrimidinyl-, Pyridazinyl-, Chinoxalinyl, Isoxazolyl- oder Oxo-1,3,4-thiadiazolyl-Gruppe bezeichnet, die durch ein bis drei gleiche oder verschiedene Alkyl-Gruppen, Alkoxy-Gruppen, Dialkylamino-Gruppen, die sämtlich jeweils 1 bis 4 Kohlenstoff-Atome im Alkyl bzw. Alkoxyteil umfassen, Halogen-Atome oder Phenyl-Gruppen substituiert sind, oder

$R^9$ und $R^{10}$ zusammen einen 1,3,2- Benzodioxaphosphorin-Ring bezeichnen.

Beispiele für die Organophosphate der allgemeinen Formel (IV) sind
O,O-Dimethyl-O-4-methylthio-m-tolyl-phosphorothioat (Fenthion),
O,O-Dimethyl-O-4-nitro-m-tolyl-phosphorothioat (Fenitrothion),
4-(Methylthio)phenyl-dipropyl-phosphat (Propaphos),

O-4-Cyanophenyl-O,O-dimethyl-phosphorothioat (Cyanophos),
O-2,4-Dichlorophenyl-O-ethyl-S-propyl-phosphorodithioat (Prothiofos),
O-Ethyl-O-4-methylthiophenyl-S-propyl-phosphorodithioat (Sulprofos),
O-4-Bromo-2-chlorophenyl-O-ethyl-S-propyl-phosphorothioat (Profenofos),
O-Ethyl-O-4-nitrophenyl-phenylphosphonothioat (EPN),
O-4-Cyanophenyl-O-ethyl-phenylphosphonothioat (Cyanofenphos),
O,S-Dimethyl-acetylphosphoramidothioat (Acephat),
S-2-Ethylsulfinyl-1-methylethyl-O,O-dimethylphosphorothioat (Oxydeprofos),
O,O-Diethyl-S-2-ethylthioethyl-phosphorodithioat (Disulfoton),
S-2-Ethylthioethyl-O,O-dimethylphosphorodithioat (Thiometon),
S-α-Ethoxycarbonylbenzyl-O,O-dimethylphosphorodithioat (Phenthoate),
S-1,2-Bis(ethoxycarbonyl)ethyl-O,O-dimethylphosphorodithioat (Malathion),
O,O-Dimethyl-S-methylcarbamoylmethyl-phosphorodithioat (Dimethoate),
O,O-Dimethyl-S-2-(1-methylcarbamoylethylthio)ethylphosphorothioat (Vamidothion),
S-(N-Ethoxycarbonyl-N-methylcarbamoylmethyl)-O,O-diethylphosphorodithioat (Mecarbam),
Dimethyl-2,2,2-trichloro-1-hydroxyethylphosphonat (Trichlorphon),
1,2-Dibromo-2,2-dichloroethyl-dimethylphosphat (Naled),
2,2-Dichlorovinyl-dimethylphosphat (Dichlorvos),
2-Chloro-1-(2,4-dichlorophenyl)vinyl-diethylphosphat (Chlorofenvinphos),
(Z)-2-Chloro-1-(2,4,5-trichlorophenyl)vinyldimethylphosphat (Tetrachlorvinphos),
Dimethyl-(E)-1-methyl-2-(methylcarbamoyl)vinylphosphat (Monocrotophos),
S-6-Chloro-2,3-dihydro-2-oxobenzoxazol-3-ylmethyl-O,O-diethylphosphorodithioat (Phosalone),
S-2-Chloro-1-phthalimidoethyl-O,O-diethylphosphorodithioat (Dialifos),
O,O-Dimethyl-O-3,5,6-trichloro-2-pyridylphosphorthioat (Chlorpyrifos-methyl),
O,O-Diethyl-O-3,5,6-trichloro-2-pyridylphosphorthioat (Chlorpyrifos),
O-2-Diethylamino-6-methylpyrimidin-4-yl-O,O-dimethylphosphorothioat (Pirimophos-methyl),
O,O-Diethyl-O-2-isopropyl-6-methylpyrimidin-4-ylphosphorothioat (Diazinon),
O-6-ethoxy-2-ethylpyrimidin-4-yl-O,O-dimethyl-phosphorothioat (Etrimfos),
0,0-Diethyl-0-2,3-dihydro-3-oxo-2-phenyl-6-pyridazinyl-phosphorthioat (Pyridaphenthion),
O,O-Diethyl-O-chinoxalin-2-ylphosphorothioat (Quinalphos),
O,O-Diethyl-O-5-phenylisoxazol-3-yl-phosphorothioat (Isoxathion),
S-2,3-Dihydro-5-methoxy-2-oxo-1,3,4-thiadiazol-3-yl-methyl-O,O-dimethylphosphorodithioat (Methidathion) und
2-Methoxy-4H-1,3,2$\lambda^5$-benzodioxaphosphorin-2-sulfid (Salithion).

Die Organophosphatester, eine Komponente der erfindungsgemäßen Wirkstoff-Kombinationen, sind bereits bekannt und sind beispielsweise in The Pesticide Manual, 7. Auflage, 1983 (veröffentlicht von dem British Crop Protection Council) als Insektizide beschrieben.

Unter den oben bezeichneten Organophosphaten werden zum Beispiel Quinalphos, Fenthion, Sulprofos, Phenthoate, Fenitrothion, Diazinon, Isoxathion, Pyridaphenthion, Trichlorphon, Chlorpyriphos-methyl, Malathion, Monocrotophos, Propaphos, EPN, Etrimfos und Tetrachlorvinphos vorzugsweise zur Bekämpfung von Schädlingen der Ordnung Lepidoptera in Reisfeldern, etwa des Reisblattwicklers (Cnaphalocrocis medinalis) und des Reishalmbohrers (Chilo suppressalis), eingesetzt.

Prothiofos, Sulprofos, Dichlorovos, Trichlorphon, Cyanophos, Pyrimophos-methyl, Chloropyrifos, Dimethoate, Phosalone, Methidathion, Chlorofenvinphos, Acephat, Salithion, Dialifox, Mecarbam, Profenofos, Naled, Phenthoate, Fenitrothion, Diazinon, Isoxathion, Malathion, EPN und Cyanofenphos werden zum Beispiel vorzugsweise zur Bekämpfung von Schädlingen der Ordnung Lepidoptera im Gartenbau, etwa der Kohlschabe, Kohlmotte bzw. Schleiermotte (Plutella maculipennis), der Kohleule bzw. des Herzwurms (Mamestra brassicae) und von Blattwicklern, angewandt.

Weiterhin werden zum Beispiel Disulfoton, Vamidothion, Thiometon und Oxydeprofos vorzugsweise im Gartenbau, insbesondere zur Bekämpfung von Schädlingen der Ordnung Hemiptera wie Blattläusen, einschließlich der Blattläuse auf Pfirsichbäumen, Baumwolle und Apfelbäumen, eingesetzt.

Die Gewichtsverhältnisse der Gruppen der Wirkstoffe in den Wirkstoff-Kombinationen können innerhalb relativ breiter Bereiche variiert werden. Im allgemeinen werden 0,05 bis 10 Gew.-Teile des Wirkstoffs der Gruppe (2) der Wirkstoffe, vorzugsweise 0,1 bis 5 Gew.-Teile, auf 1 Gew.-Teil des Wirkstoffs der Gruppe (1) der Wirkstoffe angewandt.

Weiterhin werden im allgemeinen 0,05 bis 10 Gew.-Teile des Wirkstoffs der Gruppe (3) der Wirkstoffe (Carbonsäureester der Formel (II)), vorzugsweise 0,1 bis 5 Gew.-Teile, auf 1 Gew.-Teil des Wirkstoffs der Gruppe (1) der Wirkstoffe angewandt.

Weiterhin werden im allgemeinen 0,1 bis 20 Gew.-Teile des Wirkstoffs der Gruppe (4) der Wirkstoffe (Carbamate der Formel (III)), vorzugsweise 0,2 bis 15 Gew.-Teile, auf 1 Gew.-Teil des Wirkstoffs der Gruppe (1) der Wirkstoffe angewandt.

Weiterhin werden im allgemeinen 0,05 bis 10 Gew.-Teile des Wirkstoffs der Gruppe (5) der Wirkstoffe (Organophosphatester der Vormel (IV)), vorzugsweise 0,1 bis 5 Gew.-Teile, auf 1 Gew.-Teil des Wirkstoffs der Gruppe (1) der Wirkstoffe angewandt.

Die Wirkstoff-Kombinationen gemäß der Erfindung zeigen eine ausgezeichnete insektizide Wirksamkeit. Dementsprechend können sie als Insektizide mittels Aufbringen auf Laub, Unterwasser- oder Wasseroberflächen-Anwendung, Aufbringen auf den Boden, Boden-Mischbehandlung, Aufbringen auf einen Pflanzen-Setzkasten etc. zur Einwirkung gebracht werden.

Die Wirkstoff-Kombinationen gemäß der Erfindung zeigen starke insektizide Wirksamkeit udn können aus diesem Grunde als Insektizide verwendet werden. Die erfindungsgemäßen Wirkstoff-Kombinationen weisen keine Phytotoxizität gegen Kulturpflanzen auf, zeigen nur eine niedrige Toxizität gegenüber warmblütigen Tieren und können zur genauen Bekämpfung von Schädlingen, insbesondere von Insekten, in der Land- und Forstwirtschaft sowie in gelagerten Ernteerträgen und Produkten eingesetzt werden. Sie sind aktiv gegen empfindliche und resistente Species und gegen alle oder einige Entwicklungsstadien.

Beispielsweise können die Wirkstoff-Kombinationen gemäß der Erfindung in wirksamer Weise zur Bekämpfung von Reisfeld-Schädlingen eingesetzt werden, so zum Beispiel gegen Wanzen und Laternenträger der Ordnung Hemiptera (etwa den braunen Laternenträger, den Weißrücken-Laternenträger und den kleineren braunen Laternenträger) und Blatthüpfer, Larven von Insekten der Ordnung Lepidoptera (Reishalmbohrer, Reisblattwickler etc.) und den Reiskäfer (Reisrüßler) der Ordnung Coleoptera, sowie auch gegen Schädlinge auf Gartenbau-Nutzpflanzen wie Obstbäumen und Gemüse, beispielsweise Larven von Insekten der Ordnung Lepidoptera (Kohlschabe, Kohlmotte bzw. Schleiermotte, Heerwurm, Blattwickler etc.) Schildläuse der Ordnung Hemiptera und Blattläuse.

Die Wirkstoff-Kombinationen gemäß der Erfindung zeigen eine potente insektizide Wirksamkeit. Sie können aus diesem Grunde gegen die folgenden Schädlinge eingesetzt werden:

<u>Insekten der Ordnung Coleoptera</u>

Callosobruchus chinensis,
Sitophilus zeamais,
Tribolium castaneum,
Epilachna vigintioctomaculata,
Agriotes fuscicollis,
Anomala rufocuprea,
Leptinotarsa decemlineata,
Diabrotica spp.,
Monochamus alternatus,
Lissorhoptus oryzophilus und
Lyctus brunneus.

<u>Insekten der Ordnung Lepidoptera</u>

Lymantria dispar,
Malacosoma neustria,
Pieris rapae,
Spodoptera litura,
Mamestra brassicae,
Chilo suppressalis,
Pyrausta nubilalis,
Ephestia cautella,
Adoxophyes orana,
Carpocapsa pomonella,
Agrotis fucosa,
Galleria mellonella,
Plutella maculipennis
Heliothis virscens und

Phyllocnistis citrella.

Insekten der Ordnung Hemiptera

Nephotettix cincticeps,
Nilaparvata lugens,
Laodelphax striatellus,
Sogatella furcifera,
Pseudococcus comstocki,
Unaspis yanonensis,
Myzus persicae,
Aphis pomi,
Aphis gossypii
Rhopalosiphum pseudobrassicae,
Stephanitis nashi,
Nezara spp.,
Trialeurodes vaporariorum und
Psylla spp..

Insekten der Ordnung Orthoptera

Gryllotalpa africana und
Locusta migratoria migratoriodes;

Die Wirkstoff-Kombinationen könne in gebräuchliche Formulierungen überführt werden, etwa Lösungen, Emulsionen, Suspensionen, Pulver, Schäume, Pasten, Granulat, Aerosol, mit der aktiven Verbindung imprägnierte natürliche oder synthetische Stoffe, sehr feine Kapseln in polymeren Substanzen, Überzugsmassen zur Verwendung auf Saatgut (Beizmittel) sowie Formulierungen für den Einsatz mit Verbrennungseinrichtungen wie Räucherpatronen, Räucherdosen und Räucherschlangen sowie für die kalte Vernebelung und die warme Vernebelung nach dem Ultra-Low-Volume-Verfahren.

Diese Formulierungen können in bekannter Weise hergestellt werden, beispielsweise durch Vermischen der Wirkstoff-Kombinationen mit STreckmitteln, das heißt mit flüssigen oder verflüssigten gasförmigen oder festen Verdünnungsmitteln oder Trägern, gegebenenfalls unter Verwendung grenzflächenaktiver Mittel, das heißt von Emulgatoren und/oder Dispergiermitteln und/oder schaumbildenden Mitteln. Bei Verwendung von Wasser als Streckmittel können organische Lösungsmittel beispielsweise als Hilfslösungsmittel verwendet werden.

Als flüssige Lösungsmittel, Verdünnungsmittel oder Träger hauptsächlich geeignet sind aromatische Kohlenwasserstoffe wie Xylol, Toluol oder Alkylnaphthaline, chlorierte aromatische oder chlorierte aliphatische Kohlenwasserstoffe wie Chlorbenzole, Chloroethylene oder Methylenchlorid, aliphatische Kohlenwasserstoffe wie Cyclohexan oder Paraffine, beispielsweise Mineralöl-Fraktionen, Alkohole wie Butanol oder Glycol sowie deren Ether und Ester, Ketone wie Aceton, Methylethylketon, Methylisobutylketon oder Cyclohexanon oder stark polare Lösungsmittel wie Dimethylformamid und Dimethylsulfoxid sowie auch Wasser.

Unter verflüssigten gasförmigen Verdünnungsmitteln oder Trägern sind Flüssigkeiten zu verstehen, die bei normaler Temperatur und normalem Druck gasförmig wären, beispielsweise Aerosol-Treibmittel wie halogenierte Kohlenwasserstoffe sowie Butan, Propan, Stickstoff und Kohlenstoffdioxid.

Als feste Träger verwendbar sind gemahlene natürliche Minerale wie Kaoline, Tone, Talkum, Kreide, Quarz, Attapulgit, Montmorillonit oder Diatomeenerde und gemahlene synthetische Minerale wie hochdisperse Kieselsäure, Aluminiumoxid und Silicate. Als feste Träger für Granulat können zerkleinerte und fraktionierte Natursteinmaterialien verwendet werden, etwa Calcit, Marmor, Bimsstein, Sepiolith und Dolomit sowie synthetisches Granulat aus anorganischen und organischen Mehlen und Granulat aus organischem Material wie Sägemehl, Kokosnußschalen, Maiskolben und Tabakstengel.

Als emulgierende und/oder schaumbildende Mittel können nicht-ionische und anionische Emulgatoren wie Polyoxyethylenfettsäureester, Polyoxyethylenfettalkoholether, beispielsweise Alkylarylpolyglycol-Ether, Alkylsulfonate, Alkylsulfate, Arylsulfonate sowie Albumin-Hydrolyseprodukte verwendet werden. Zu Dispergiermitteln zählen beispielsweise Ligninsulfit-Ablaugen und Methylcellulose.

Haftmittel wie Carboxymethylcellulose und natürliche und synthetische Polymere in Form von Pulvern, Granulat oder Latices wie Gummi arabicum, Polyvinylalkohol und Polyvinylacetat können bei der Formulierung verwendet werden.

Es ist möglich, in den Formulierungen auch farbgebende Mittel, etwa anorganische Pigmente wie beispielsweise Eisenoxid, Titanoxid und Preußisch Blau und organische Farbstoffe wie Alizarin- Farbstoffe, Azo-Farbstoffe oder Metallphthalocyanin-Farbstoffe, sowie Spuren-Nährstoffe wie Salze von Eisen, Mangan, Bor, Kupfer, Cobalt, Molybdän und Zink zur verwenden.

Die Formulierungen enthalten im allgemeinen 0,1 bis 95 Gew.-%, vorzugsweise 0,5 bis 90 Gew.-% der Wirkstoffe.

Die Wirkstoff-Kombinationen gemäß der Erfindung können in ihren handelsüblichen Formulierungen oder den aus diesen Formulierungen hergestellten Anwendungsformen im Gemisch mit anderen Wirkstoffen vorliegen, etwa mit Insektiziden, Ködern, Sterilisationsmitteln, Akariziden, Nematiziden, Fungiziden, Wachstumsregulatoren oder Herbiziden. Zu den Insektiziden gehören beispielsweise Phosphate, Carbamate, Carboxylate, chlorierte Kohlenwasserstoffe, Phenylharnstoffe und von Mikroorganismen erzeugte Substanzen.

Die Wirkstoff-Kombinationen gemäß der vorliegenden Erfindung können weiterhin in ihren handelsüblichen Formulierungen oder den aus diesen Formulierungen hergestellten Anwendungsformen im Gemisch mit synergistischen Mitteln vorliegen. Synergistische Mittel sind Verbindungen, die die Wirkung der aktiven Verbindungen steigern, ohne daß es für das zugesetzte synergistische Mittel erforderlich ist, selbst aktiv zu sein.

Der Gehalt der Wirkstoff-Kombinationen in den aus den im Handel erhältlichen Formulierungen hergestellten Anwendungsformen kann innerhalb weiter Grenzen variieren. Die Konzentration der Wirkstoff-Kombinationen in den Anwendungsformen kann 0,00001 bis 100 Gew.-% betragen und liegt vorzugsweise zwischen 0,00004 und 1 Gew.-%.

Die Verbindungen werden in üblicher Weise in einer den Anwendungsformen angemessenen Form zur Anwendung gebracht.

Bei der Verwendung gegen Schädlinge in Produkt-Vorräten zeichnen sich die Wirkstoff-Kombinationen durch eine hervorragende Residualwirkung auf Holz und Ton sowie eine gute Beständigkeit gegen Alkali auf gekalkten Unterlagen aus.

Die folgenden Beispiele erläutern die vorliegende Erfindung im einzelnen. Es sei jedoch darauf hingewiesen, daß die vorliegende Erfindung nicht allein auf diese speziellen Beispiele beschränkt ist.

A) Biologische Beispiele für neue Wirkstoff-Kombinationen aus (1) einem Nitromethylen-Derivat der Formel (I) und einer insektiziden Verbindung der Gruppe (2):

Beispiel 1

Test gegen Cnaphalocrosis

**Herstellung einer Test-Chemikalie:**

| | | |
|---|---|---|
| **Lösungsmittel:** | **3 Gew.-Teile** | **Dimethylformamid** |
| **Emulgator:** | **1 Gew.-Teil** | **Polyoxyethylen-alkylphenylether** |

Zur Herstellung einer Formulierung der Wirkstoffe wurde 1 Gew.-Teil der aktiven Verbindungen mit der oben bezeichneten Menge Lösungsmittel, das die oben angegebene Menge Emulgator enthielt, vermischt, und die Mischung wurde mit Wasser auf eine vorher festgesetzte Konzentration verdünnt.

Test-Verfahren :

Drei Reis-Setzlinge von 15 cm Höhe wurden jeweils in Vinylharz-Töpfe von 9 cm Durchmesser gepflanzt. Zehn Tage nach dem Umpflanzen wurde eine wäßrige Verdünnung des Wirkstoffs mit einer

vorbestimmten Konzentration, die wie oben angegeben hergestellt wurde, in einer Menge von 20 ml pro Topf mittels einer Spritzpistole auf die Pflanzen gesprüht. Nach dem Trocknen der aufgesprühten Substanz an der Luft wurde ein Zylinder aus Kunststoff-Netz von 9 cm Durchmesser und 25 cm Höhe über jeden Topf gestülpt, und 10 Larven von Reisblattwicklern (Cnaphalocrosis medinalis Gueneer) im vierten Entwicklungsstadium wurden in jedem Topf ausgesetzt. Die Töpfe wurden jeweils in einen Raum mit konstanter Temperatur gestellt, und 2 Tage später wurde die Zahl der toten Insekten gezählt. Die Abtötungsrate (in Prozent) wurde dann berechnet. Der obige Test wurde mit zwei Parallelversuchen durchgeführt.

Die Ergebnisse sind in Tabelle 1 dargestellt.

## Tabelle 1

**Cnaphalocrosis-Test**

| Test-Chemikalie | Wirkstoff-Konzentration (ppm) | Abtötungsrate (%) |
|---|---|---|
| Nr. 1 + [A] | 40 + 8 | 100 |
| Nr. 1 + [B] | 40 + 8 | 100 |
| Nr. 2 + [A] | 40 + 8 | 100 |
| Nr. 2 + [B] | 40 + 8 | 100 |
| Nr. 1 | 40 | 30 |
| Nr. 2 | 40 | 25 |
| [A] | 8 | 30 |
| [B] | 8 | 45 |
| unbehandelt | - | 0 |

Anmerkungen

1. Keine der in den Tests dieses Beispiels eingesetzten Chemikalien-Gemische oder einzelnen Chemikalien zeigte Phytotoxizität.
2. In der vorliegenden Erfindung verwendete Verbindung der allgemeinen Formel (I):
   Verbindung Nr. 1: 3-(2-Chloro-5-pyridylmethyl)-2-(nitromethylen)thiazolidin
   Verbindung Nr. 2: 3-(2-Chloro-5-pyridylmethyl)-2-(nitromethylen)tetrahydro-2H-1,3-thiazin.
3. Verbindungen aus der oben genannten Gruppe (2) der Insektizide, die in der vorliegenden Erfindung eingesetzt werden:
   [A]: Cartap,
   [B]: Thiocyclam.

Beispiel 2

Test gegen Sogatella

Drei Reis-Setzlinge von etwa 15 cm Höhe wurden jeweils in Töpfe von etwa 13 cm Durchmesser gepflanzt, und zehn Tage nach dem Umpflanzen wurde eine wäßrige Verdünnung der Wirkstoffe mit einer vorbestimmten Konzentration, die wie in Beispiel 1 hergestellt wurde, in einer Menge von 20 ml pro Topf mittels einer Spritzpistole auf die Pflanzen gesprüht. Zehn Tage und zwanzig Tage nach dem Sprühen wurde ein Käfig über jeden Topf gestülpt, und zehn Larven von Weißrücken-Laternenträgern (Sogatella furcifera) im dritten Entwicklungsstadium wurden in jedem Topf ausgesetzt. Die Töpfe wurden jeweils in einen Raum mit konstanter Temperatur gestellt, und 2 Tage und 7 Tage später wurde die Zahl der toten Insekten gezählt. Die Abtötungsrate (in Prozent) wurde dann berechnet. Der obige Test wurde mit zwei Parallelversuchen durchgeführt.

Die Ergebnisse sind in Tabelle 2 dargestellt.

## Tabelle 2

**Sogatella-Test**

| Test-Chemikalie | Wirkstoff-Konzentration (ppm) | | | Abtötungsrate (%) Befall nach 10 Tagen bestimmt 2 d später | 7 d später | Befall nach 20 Tagen bestimmt 2 d später | 7 d später |
|---|---|---|---|---|---|---|---|
| Nr. 1 + [C] | 8 | + | 8 | 100 | - | 100 | - |
| | 4 | + | 4 | 100 | - | 80 | 100 |
| Nr. 2 + [C] | 8 | + | 8 | 100 | - | 100 | - |
| | 4 | + | 4 | 95 | 100 | 80 | 100 |
| Nr. 1 | 8 | | | 90 | 90 | 40 | 45 |
| Nr. 2 | 8 | | | 85 | 90 | 40 | 40 |
| [C] | | | 8 | 0 | 85 | 0 | 70 |
| unbehandelt | | - | | 0 | 0 | 0 | 0 |

Anmerkungen

1. Keine der in Beispiel 2 eingesetzten Chemikalien-Gemische oder einzelnen Chemikalien zeigte Phytotoxizität.
2. Die in der vorliegenden Erfindung verwendeten Verbindungen Nr. 1 und 2 der allgemeinen Formel (I) sind die gleichen wie diejenigen, die in Beispiel 1 angegeben sind.
3. Verbindung aus der oben genannten Gruppe (2) der Insektizide, die in der vorliegenden Erfindung eingesetzt wird:

   [C]: Buprofezin.

Beispiel 3

Test gegen Plutella

Test-Verfahren :

Eine wäßrige Verdünnung der Wirkstoffe mit einer vorbestimmten Konzentration, die wie in Beispiel 1 hergestellt wurde, wurde auf Kohlsetzlinge von etwa 15 cm Höhe vor der Kopfbildung, die in Töpfe mit einem Durchmesser von 9 cm gepflanzt worden waren, in einer Menge von 20 ml pro Topf mittels einer Spritzpistole aufgesprüht. Die aufgesprühte Substanz wurde an der Luft trocknen gelassen und zehn Larven von Kohlmotten (Plutella maculipennis) im zweiten Entwicklungsstadium wurden in jedem Topf ausgesetzt. Die Töpfe wurden jeweils in einen Raum mit konstanter Temperatur gestellt, und die Zahl der toten Insekten wurde 2 Tage und 7 Tage später gezählt. Die Abtötungsrate (in Prozent) wurde berechnet. Der obige Test wurde mit zwei Parallelversuchen durchgeführt.

Die Ergebnisse sind in Tabelle 3 dargestellt.

Tabelle 3

Plutella-Test

| Test-Chemikalie | Wirkstoff-Konzentration (ppm) | Abtötungsrate (%) 2 Tage später | 7 Tage später |
|---|---|---|---|
| Nr. 1 + [D] | 40 + 20 | 100 | |
| | 20 + 10 | 70 | 100 |
| Nr. 2 + [E] | 40 + 4 | 100 | |
| | 20 + 2 | 60 | 100 |
| Nr. 1 | 40 | 55 | 60 |
| Nr. 2 | 40 | 50 | 55 |
| [D] | 20 | 0 | 40 |
| [E] | 4 | 0 | 40 |
| unbehandelt | - | 0 | 0 |

Anmerkungen

1. Keine der in Beispiel 3 eingesetzten Chemikalien-Gemische oder einzelnen Chemikalien zeigte Phytotoxizität.

2. Die in der vorliegenden Erfindung verwendeten Verbindungen Nr. 1 und 2 der allgemeinen Formel (I) sind die gleichen Verbindungen wie in Beispiel 1.
3. Verbindungen aus der oben genannten Gruppe (2) der Insektizide, die in der vorliegenden Erfindung eingesetzt werden:
[D]: 1-(2,4-Difluoro-3,5-dichlorophenyl)-3-(2,6-difluorobenzoyl)harnstoff;
[E]: N-(2,6-Difluorobenzoyl)-N'-[3,5-dichloro-4-(3-chloro-5-trifluoromethyl-2-pyridyloxy)-phenyl]harnstoff.

Beispiel 4

Test gegen Plutella

Test-Verfahren :

Eine wäßrige Verdünnung der Wirkstoffe mit einer vorbestimmten Konzentration, die wie in Beispiel 1 hergestellt wurde, wurde auf Kohlsetzlinge von etwa 15 cm Höhe vor der Kopfbildung, die in Töpfe mit einem Durchmesser von 9 cm gepflanzt worden waren, in einer Menge von 20 ml pro Topf mittels einer Spritzpistole aufgesprüht. Nach dem Trocknen der aufgesprühten Substanz an der Luft wurden zehn Larven von Kohlmotten (Plutella maculipennis), die gegen Organophosphor-Verbindungen resistent waren, im vierten Entwicklungsstadium in jedem Topf ausgesetzt. Die Töpfe wurden jeweils in einen Raum mit konstanter Temperatur gestellt. 2 Tage später wurde die Zahl der toten Insekten gezählt, und die Abtötungsrate (in Prozent) wurde berechnet. Der obige Test wurde mit zwei Parallelversuchen durchgefährt.

Die Ergebnisse sind in Tabelle 4 dargestellt.

Tabelle 4

Plutella-Test

| Test-Chemikalie | Wirkstoff-Konzentration (ppm) | Abtötungsrate (%) |
|---|---|---|
| Nr. 1 + [F] | 40 + 40 | 100 |
| Nr. 2 + [F] | 40 + 40 | 100 |
| Nr. 1 | 40 | 45 |
| Nr. 2 | 40 | 40 |
| [F] | 40 | 30 |
| unbehandelt | - | 0 |

Anmerkungen

1. Keine der in Beispiel 4 eingesetzten Chemikalien-Gemische oder einzelnen Chemikalien zeigte Phytotoxizität.
2. Die in der vorliegenden Erfindung verwendeten Verbindungen Nr. 1 und 2 der allgemeinen Formel (I) sind die gleichen wie diejenigen, die in Beispiel 1 verwendet wurden.

3. Verbindung aus der oben genannten Gruppe (2) der Insektizide, die in der vorliegenden Erfindung eingesetzt wird:
[F]: 3-Phenoxybenzyl-2-(4-ethoxyphenyl)-2-methylpropylether.

Beispiel 5

Benetzbares Pulver

20 Teile des Wirkstoffs der Formel (I), 20 Teile Cartap, 55 Teile eines 1 : 5 -Gemischs aus pulvriger Diatomeenerde und pulvrigem Ton, 2 Teile Alkylbenzolsulfonat und 3 Teile Natrium-alkylnaphthalinsulfonat-Formaldehyd-Kondensat werden pulversisiert und miteinander vermischt, wodurch ein benetzbares Pulver erhalten wird.

B) Biologische Beispiele für neue Wirkstoff-Kombinationen aus (1) einem Nitromethylen-Derivat der Formel (I) und einer Carbonsäureester-Verbin dung der Gruppe (3) (Formel (II)):

Beispiel 6

Test gegen Plutella

**Herstellung einer Test-Chemikalie:**

| | | |
|---|---|---|
| **Lösungsmittel:** | **3 Gew.-Teile** | **Dimethylformamid** |
| **Emulgator:** | **1 Gew.-Teil** | **Polyoxyethylen-alkylphenylether** |

Zur Herstellung einer Formulierung der Wirkstoffe wurde 1 Gew.-Teil der Wirkstoffe mit der oben bezeichneten Menge Lösungsmittel, das die oben angegebene Menge Emulgator enthielt, vermischt, und die Mischung wurde mit Wasser auf eine vorher festgesetzte Konzentration verdünnt.

Test-Verfahren :

Eine wäßrige Verdünnung der Wirkstoffe mit einer vorbestimmten Konzentration, die wie im Vorstehenden angegeben hergestellt wurde, wurde auf Kohlsetzlinge von etwa 15 cm Höhe vor der Kopfbildung, die in Töpfe mit einem Durchmesser von 9 cm gepflanzt worden waren, in einer Menge von 20 ml pro Topf mittels einer Spritzpistole aufgesprüht. Die aufgesprühte Substanz wurde an der Luft trocknen gelassen, und zehn Larven von Kohlmotten (Plutella maculipennis), die gegen Organophosphor-Verbindungen resistent waren, im vierten Entwicklungsstadium wurden in jedem Topf ausgesetzt. Die Töpfe wurden jeweils in einen Raum mit konstanter Temperatur gestellt, und die Zahl der toten Insekten wurde 2 Tage später gezählt. Die Abtötungsrate (in Prozent) wurde berechnet. Der obige Test wurde mit zwei Parallelversuchen durchgeführt.

Die Ergebnisse sind in Tabelle 5 dargestellt.

## Tabelle 5

**Plutella-Test**

| Test-Chemikalie | Wirkstoff-Konzentration (ppm) | Abtötungsrate (%) |
|---|---|---|
| Nr. 1 + [A] | 40 + 8 | 100 |
| Nr. 1 + [B] | 40 + 8 | 100 |
| Nr. 1 + [C] | 40 + 8 | 100 |
| Nr. 1 + [D] | 40 + 8 | 100 |
| Nr. 2 + [E] | 40 + 8 | 100 |
| Nr. 2 + [F] | 40 + 8 | 100 |
| Nr. 2 + [G] | 40 + 80 | 100 |
| Nr. 1 | 40 | 45 |
| Nr. 2 | 40 | 40 |
| [A] | 8 | 30 |
| [B] | 8 | 40 |
| [C] | 8 | 20 |
| [D] | 8 | 5 |
| [E] | 8 | 20 |
| [F] | 8 | 15 |
| [G] | 80 | 25 |
| unbehandelt | - | 0 |

Anmerkungen

1. Keine der in dem Test des Beispiels 6 eingesetzten Chemikalien-Gemische oder einzelnen Chemikalien zeigte Phytotoxizität.
2. In der vorliegenden Erfindung verwendete Verbindungen der allgemeinen Formel (I):
   Verbindung Nr. 1: 3-(2-Chloro-5-pyridylmethyl)-2-(nitromethylen)thiazolidin
   Verbindung Nr. 2: 3-(2-Chloro-5-pyridylmethyl)-2-(nitromethylen)tetrahydro-2H-1,3-thiazin.
3. Verbindungen (Carbonsäureester der Formel (II)) aus der oben genannten Gruppe (3) der Insektizide, die in der vorliegenden Erfindung eingesetzt werden:
   [A]: Cyfluthrin,
   [B]: Cyhalothrin,
   [C]: Fenpropathrin,
   [D]: Fenvalerate,
   [E]: Flucythrinate,
   [F]: Fluvalinate,
   [G]: α-Cyano-5-phenoxybenzyl-1-p-ethoxyphenyl-2,2-dichlorocyclopropan-1-carboxylat.

Beispiel 7

Emulgierbares Konzentrat

2 Teile des Wirkstoffs der Formel (I), 2 Teile Cyfluthrin, 81 Teile Xylol, 8 Teile Polyoxyethylenalkylphenylether und 7 Teile Calciumalkylbenzolsulfonat werden unter Rühren miteinander vermischt, wodurch ein emulgierbares Konzentrat erhalten wird.

C) Biologische Beispiele für neue Wirkstoff-Kombinationen aus (1) einem Nitromethylen-Derivat der Formel (I) und einem Carbamat der Gruppe (4) (Formel (III)):

Beispiel 8

Test gegen Nilaparvata

**Herstellung einer Test-Chemikalie:**

| | | |
|---|---|---|
| **Lösungsmittel:** | **3 Gew.-Teile** | **Dimethylformamid** |
| **Emulgator:** | **1 Gew.-Teil** | **Polyoxyethylen-alkylphenylether** |

Zur Herstellung einer Formulierung der Wirkstoffe wurde 1 Gew.-Teil der Wirkstoffe mit der oben bezeichneten Menge Lösungsmittel, das die oben angegebene Menge Emulgator enthielt, vermischt, und die Mischung wurde mit Wasser auf eine vorher festgesetzte Konzentration verdünnt.

Test-Verfahren :

Drei Reis-Setzlinge von 15 cm Höhe wurden jeweils in Töpfe von 13 cm Durchmesser gepflanzt. Zehn Tage nach dem Umpflanzen wurde eine wäßrige Verdünnung der aktiven Verbindungen mit einer vorbestimmten Konzentration, die wie oben angegeben hergestellt wurde, in einer Menge von 20 ml pro Topf mittels einer Spritzpistole auf die Pflanzen gesprüht. Nach dem Trocknen der aufgesprühten Substanz an der Luft wurde ein Käfig über jeden Topf gestülpt, und 10 Larven brauner Reisblattwanzen (Nilaparvata lugens) im vierten Entwicklungsstadium wurden in jedem Topf ausgesetzt. Die Töpfe wurden jeweils in einen Raum mit konstanter Temperatur gestellt. Drei Tage später wurde die Zahl der toten Insekten gezählt, und die Abtötungsrate (in Prozent) wurde berechnet. Der obige Test wurde mit zwei Parallelversuchen durchgeführt.

Die Ergebnisse sind in Tabelle 6 dargestellt.

## Tabelle 6

Nilaparvata-Test

| Test-Chemikalie | Wirkstoff-Konzentration (ppm) | Abtötungs-rate (%) |
|---|---|---|
| Nr. 1 + [A] | 8 + 100 | 100 |
| Nr. 1 + [B] | 8 + 100 | 100 |
| Nr. 1 + [C] | 8 + 100 | 100 |
| Nr. 1 + [D] | 8 + 100 | 100 |
| Nr. 1 + [E] | 8 + 100 | 100 |
| Nr. 2 + [F] | 8 + 100 | 100 |
| Nr. 2 + [G] | 8 + 100 | 100 |
| Nr. 2 + [H] | 8 + 100 | 100 |
| Nr. 2 + [I] | 8 + 100 | 100 |
| Nr. 1 | 8 | 35 |
| Nr. 2 | 8 | 30 |
| [A] | 100 | 50 |
| [B] | 100 | 45 |
| [C] | 100 | 10 |
| [D] | 100 | 15 |
| [E] | 100 | 20 |
| [F] | 100 | 50 |
| [G] | 100 | 5 |
| [H] | 100 | 15 |
| [I] | 100 | 35 |
| unbehandelt | - | 0 |

Anmerkungen

1. Keine der in dem Test des Beispiels 6 eingesetzten Chemikalien-Gemische oder einzelnen Chemikalien zeigte Phytotoxizität.
2. In der vorliegenden Erfindung verwendete Verbindungen der allgemeinen Formel (I):
   Verbindung Nr. 1: 3-(2-Chloro-5-pyridylmethyl)-2-(nitromethylen)thiazolidin
   Verbindung Nr. 2: 3-(2-Chloro-5-pyridylmethyl)-2-(nitromethylen)tetrahydro-2H-1,3-thiazin.
3. Verbindungen (Carbamate der Formel (III)), die in der vorliegenden Erfindung eingesetzt werden:
   [A]: Propoxur,
   [B]: BPMC,
   [C]: Isoprocarb,
   [D]: Metolcarb,

[E]: Xylylcarb,
[F]: Carbofuran,
[G]: Carbosulfan,
[H]: Aminosulfan,
[I]: Bendiocarb.

Beispiel 9

Test gegen Aphis

Test-Verfahren :

Baumwollblattläuse (Gurkenblattläuse; Aphis gossypii), die gezüchtet worden waren, wurden auf Auberginen-Setzlingen von etwa 15 cm Höhe ausgesetzt, die in Töpfen von 9 cm Durchmesser gezogen worden waren, und zwar etwa 100 Blattläuse pro Setzling. Einen Tag nach dem Aussetzen wurde eine wäßrige Verdünnung der Wirkstoffe, die wie in Beispiel 8 hergestellt wurde, mit einer vorbestimmten Konzentration in einer Menge von 20 ml pro Topf mittels einer Spritzpistole auf die Pflanzen gesprüht. Nach dem Sprühen wurden die Töpfe in einem Gewächshaus bei 28° C gehalten. Zwei Tage nach dem Sprühen wurde die Zahl der toten Insekten gezählt, und die Abtötungsrate (in Prozent) wurde berechnet.

Die Ergebnisse sind in Tabelle 7 dargestellt.

## Tabelle 7

Aphis-Test

| Test-Chemikalie | Wirkstoff-Konzentration (ppm) | Abtötungsrate (%) |
|---|---|---|
| Nr. 1 + [J] | 40 + 40 | 100 |
| Nr. 1 + [K] | 40 + 40 | 100 |
| Nr. 2 + [J] | 40 + 40 | 100 |
| Nr. 2 + [K] | 40 + 40 | 100 |
| Nr. 1 | 40 | 42 |
| Nr. 2 | 40 | 42 |
| [J] | 40 | 36 |
| [K] | 40 | 40 |
| unbehandelt | - | 0 |

Anmerkungen:

1. Keine der in den Tests dieses Beispiels eingesetzten Chemikalien-Gemische oder einzelnen Chemikalien zeigte Phytotoxizität.

2. Die in der vorliegenden Erfindung verwendeten Verbindungen Nr. 1 und 2 der allgemeinen Formel (I) sind die gleichen wie diejenigen, die in Beispiel 8 eingesetzt wurden.

3. Verbindungen (Carbamate der Formel (III)), die in der vorliegenden Erfindung eingesetzt werden:

[J]: Ethiofencarb,

[K]: Pirimicarb.

Beispiel 10

Benetzbares Pulver

20 Teile des Wirkstoffs der Formel (I), 20 Teile Propoxur, 55 Teile eines 1 : 5 -Gemischs aus pulvriger Diatomeenerde und pulvrigem Ton, 2 Teile Natrium-alkylbenzolsulfonat und 3 Teile Natrium-alkylnaphthalinsulfonat-Formaldehyd-Kondensat werden pulverisiert und miteinander vermischt, wodurch ein benetzbares Pulver erhalten wird.

Beispiel 11

Stäubemittel

Ein Teil des Wirkstoffs der Formel (I), ein Teil BPMC und 98 Teile pulvriger Ton werden pulverisiert und miteinander vermischt, wodurch ein Stäubemittel erhalten wird.

Beispiel 12

Granulat

Ein Drehmischer wird mit 96 Teilen Tonmineral-Teilchen mit einer Teilchengrößen-Verteilung zwischen 0,2 und 2 mm beschickt, und unter Drehen werden 2 Teile der aktiven Substanz der Formel (I) und 2 Teile Propoxur auf die Teilchen aufgesprüht, um sie gleichmäßig zu benetzen. Die Teilchen wurden getrocknet, wodurch ein Granulat gebildet wird.

D) Biologische Beispiele für neue Wirkstoff-Kombinationen aus (1) einem Nitromethylen-Derivat der Formel (I) und einem Organophosphat-ester der Gruppe (5) (Formel (IV)):

Beispiel 13

Test gegen cnaphalocrocis

**Herstellung einer Test-Chemikalie:**

| | | |
|---|---|---|
| **Lösungsmittel:** | **3 Gew.-Teile** | **Dimethylformamid** |
| **Emulgator:** | **1 Gew.-Teil** | **Polyoxyethylen-alkylphenylether** |

Zur Herstellung einer Formulierung der Wirkstoffe wurde 1 Gew.-Teil des Wirkstoffs mit der oben bezeichneten Menge Lösungsmittel, das die oben angegebene Menge Emulgator enthielt, vermischt, und

die Mischung wurde mit Wasser auf eine vorher festgesetzte Konzentration verdünnt.

Test-Verfahren :

Drei Reis-Setzlinge von 15 cm Höhe wurden jeweils in Vinylharz-Töpfe von 9 cm Durchmesser gepflanzt. Zehn Tage nach dem Umpflanzen wurde eine wäßrige Verdünnung der Wirkstoffe mit einer vorbestimmten Konzentration, die wie oben angegeben hergestellt wurde, in einer Menge von 20 ml pro Topf mittels einer Spritzpistole auf die Pflanzen gesprüht. Nach dem Trocknen der aufgesprühten Substanz an der Luft wurde ein Zylinder aus Kunststoff-Netz von 9 cm Durchmesser und 25 cm Höhe über jeden Topf gestülpt, und 10 Larven von Reisblattwicklern (Cnaphalocrocis medinalis) im vierten Entwicklungsstadium wurden in jedem Topf ausgesetzt.

Die Töpfe wurden jeweils in einen Raum mit konstanter Temperatur gestellt. Zwei Tage später wurde die Zahl der toten Insekten gezählt, und die Abtötungsrate (in Prozent) wurde dann berechnet. Der obige Test wurde mit zwei Parallelversuchen durchgeführt.

Die Ergebnisse sind in Tabelle 8 dargestellt.

## Tabelle 8

**Cnaphalocrocis-Test**

| Test-Chemikalie | Wirkstoff-Konzentration (ppm) | Abtötungsrate (%) |
|---|---|---|
| Nr. 1 + [A] | 40 + 8 | 100 |
| Nr. 1 + [B] | 40 + 8 | 100 |
| Nr. 2 + [C] | 40 + 8 | 100 |
| Nr. 2 + [D] | 40 + 8 | 100 |
| Nr. 1 | 40 | 30 |
| Nr. 2 | 40 | 25 |
| [A] | 8 | 40 |
| [B] | 8 | 30 |
| [C] | 8 | 50 |
| [D] | 8 | 30 |
| unbehandelt | - | 0 |

Anmerkung

1. Keine der in den Tests dieses Beispiels eingesetzten Chemikalien-Gemische oder einzelnen Chemikalien zeigte Phytotoxizität.
2. In der vorliegenden Erfindung verwendete Verbindungen der allgemeinen Formel (I):
   Verbindung Nr. 1: 3-(2-Chloro-5-pyridylmethyl)-2-(nitromethylen)thiazolidin

Verbindung Nr. 2: 3-(2-Chloro-5-pyridylmethyl)-2-(nitromethylen)tetrahydro-2H-1,3-thiazin.

3. Verbindungen (Organophosphatester der Formel (IV)), die in der vorliegenden Erfindung eingesetzt werden:

[A]: Isoxathin,
[B]: Pyridaphenthion,
[C]: Tetrachlorvinphos,
[D]: Sulprofos.

Beispiel 14

Test gegen Plutella

Test-Verfahren :

Eine wäßrige Verdünnung der Wirkstoffe mit einer vorbestimmten Konzentration, die wie in Beispiel 1 hergestellt wurde, wurde auf Kohlsetzlinge von etwa 15 cm Höhe vor der Kopfbildung, die in Töpfe mit einem Durchmesser von 9 cm gepflanzt worden waren, in einer Menge von 20 ml pro Topf mittels einer Spritzpistole aufgesprüht. Nach dem Trocknen der aufgesprühten Substanz an der Luft wurden zehn Larven von gegen Organophosphat resistenten Kohlmotten (Plutella maculipennis) im vierten Entwicklungsstadium in jedem Topf ausgesetzt. Die Töpfe wurden jeweils in einen Raum mit konstanter Temperatur gestellt. 2 Tage später wurde die Zahl der toten Insekten gezählt, und die Abtötungsrate (in Prozent) wurde berechnet. Der obige Test wurde mit zwei Parallelversuchen durchgeführt.

Die Ergebnisse sind in Tabelle 9 dargestellt.

**Tabelle 9**

**Plutella-Test**

| Test-Chemikalie | Wirkstoff-Konzentration (ppm) | Abtötungsrate (%) |
|---|---|---|
| Nr. 1 + [E] | 40 + 40 | 100 |
| Nr. 1 + [F] | 40 + 40 | 100 |
| Nr. 2 + [G] | 40 + 40 | 100 |
| Nr. 2 + [H] | 40 + 40 | 100 |
| Nr. 1 | 40 | 45 |
| Nr. 2 | 40 | 40 |
| [E] | 40 | 25 |
| [F] | 40 | 40 |
| [G] | 40 | 30 |
| [H] | 40 | 30 |
| unbehandelt | - | 0 |

Anmerkungen

1. Keine der in den Tests des Beispiels 14 eingesetzten Chemikalien-Gemische oder einzelnen Chemikalien zeigte Phytotoxizität.
2. Die in der vorliegenden Erfindung verwendeten Verbindungen Nr. 1 und 2 der allgemeinen Formel (I) sind die gleichen wie diejenigen, die in Beispiel 13 eingesetzt wurden.
3. Verbindungen (Organophosphat-ester der Formel (IV)), die in der vorliegenden Erfindung eingesetzt werden:
   [E]: Prothiofos,
   [F]: Pirimiphos-methyl,
   [G]: Chlorpyrifos,
   [H]: Acephate.

Beispiel 15

Test gegen Aphis

Test-Verfahren :

Gezüchtete Baumwollblattläuse (Aphis gossypii) wurden auf Auberginen-Setzlingen vonetwa 15 cm Höhe ausgesetzt, die in Töpfen von 9 cm Durchmesser gezogen worden waren, und zwar etwa 100 Blattläuse pro Setzling. Einen Tag nach dem Aussetzen wurde eine wäßrige Verdünnung der Wirkstoffe mit einer vorbestimmten Konzentration, die wie in Beispiel 13 hergestellt wurde, in einer Menge von 20 ml pro Topf mittels einer Spritzpistole auf die Pflanzen gesprüht. Nach dem Sprühen wurden die Töpfe in einem Gewächshaus bei 28° C stehen gelassen. Zwei Tage nach dem Sprühen wurde die Zahl der toten Insekten

gezählt, und die Abtötungsrate (in Prozent) wurde berechnet.

Die Ergebnisse sind in Tabelle 10 dargestellt.

**Tabelle 10**

**Aphis-Test**

| Test-Chemikalie | Wirkstoff-Konzentration (ppm) | | | Abtötungsrate (%) |
|---|---|---|---|---|
| Nr. 1 + [I] | 40 | + | 40 | 100 |
| Nr. 1 + [J] | 40 | + | 40 | 100 |
| Nr. 2 + [I] | 40 | + | 40 | 100 |
| Nr. 2 + [J] | 40 | + | 40 | 100 |
| Nr. 1 | 40 | | | 42 |
| Nr. 2 | 40 | | | 42 |
| [I] | | | 40 | 25 |
| [J] | | | 40 | 17 |
| unbehandelt | | - | | 0 |

Anmerkungen

1. Keine der in den Tests des Beispiels 15 eingesetzten Chemikalien-Gemische oder einzelnen Chemikalien zeigte Phytotoxizität.
2. Die in der vorliegenden Erfindung verwendeten Verbindungen Nr. 1 und 2 der allgemeinen Formel (I) sind die gleichen wie diejenigen, die in Beispiel 13 eingesetzt wurden.
3. Verbindungen (Carbamate der Formel (IV)), die in der vorliegenden Erfindung eingesetzt werden:
   [I]: Disulfoton,
   [J]: Vamidothion.

Beispiel 16

Benetzbares Pulver

20 Teile des Wirkstoffs der Formel (I), 20 Teile Prothiofos, 55 Teile eines 1 : 5 -Gemischs aus pulvriger Diatomeenerde und pulvrigem Ton, 2 Teile Alkylbenzolsulfonat und 3 Teile Natrium-alkylnaphthalinsulfonat-Formaldehyd-Kondensat werden pulverisiert und miteinander vermischt, wodurch ein benetzbares Pulver erhalten wird.

Beispiel 17

Stäubemittel

Ein Teil des Wirkstoffs der Formel (I), zwei Teile Pyridaphenthion und 97 Teile pulvriger Ton werden pulverisiert und miteinander vermischt, wodurch ein Stäubemittel erhalten wird.

Beispiel 18

Granulat

Ein Drehmischer wird mit 95 Teilen Tonmineral-Teilchen mit einer Teilchengrößen-Verteilung zwischen 0,2 und 2 mm beschickt, und unter Drehen werden 2 Teile des Wirkstoffs der Formel (I) und 3 Teile Disulfoton auf die Teilchen aufgesprüht, um sie gleichmäßig zu benetzen. Die Teilchen wurden getrocknet, wordurch ein Granulat gebildet wird.

## Ansprüche

1. Insektizide Mittel enthaltend
(1) ein Nitromethylen-Derivat der Formel (I)

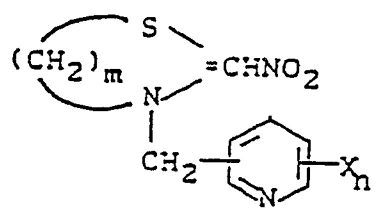

(I)

in der
X ein Halogen-Atom, eine Alkyl-Gruppe oder eine Alkoxy-Gruppe bezeichnet,
n 0, 1 oder 2 bezeichnet und
m 2 oder 3 bezeichnet, und
wenigstens eine aus den folgenden Gruppen (2) bis (5) ausgewählte insektizide Verbindung:
(2) Gruppe der Insektizide bestehend aus
S,S'-2-Dimethylaminotrimethylen-bis(thiocarbamat), N,N-Dimethyl-1,2,3-trithian-5-ylamin, 2-t-Butylimino-3-isopropyl-5-phenyl-1,3,5-thiadiazinan-4-on, 1-(4-Chlorophenyl)-3-(2,6-difluorobenzoyl)-harnstoff, N-(2,6-Difluorobenzoyl-N'-[3,5-dichloro-4-(3-chloro-5-trifluoromethyl-2-pyridyloxy)phenyl]-harnstoff, 3-Phenoxybenzyl-2-(4-ethoxyphenyl)-2-methylpropylether, 1-(4-Trifluoromethoxyphenyl)-3-(2-chlorobenzoyl)harnstoff, 1-[4-(2-Dichloro-1-difluoroethoxy)phenyl]-3-(2-chlorobenzoyl)harnstoff, 1-(4-Trifluorophenyl)-3-(2,6-difluorobenzoyl)harnstoff, 1-(2,4-Difluoro-3,5-dichlorophenyl)-3-(2,6-difluorobenzoyl)harnstoff;
(3) Gruppe der Carbonsäureester der folgenden Formel

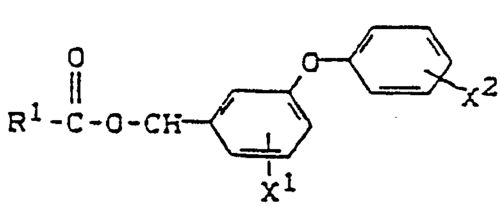

(II)

in der
$R^1$ eine Alkyl-Gruppe bezeichnet, die durch eine Phenyl-Gruppe substituiert ist, die ihrerseits durch einen aus Halogen-Atomen, Niederalkoxy-Gruppen und Niederhalogenoalkoxy-Gruppen ausgewählten Substituenten substituiert ist, und wobei die Alkyl-Gruppe weiter durch eine

Dichlorocyclopropan-Gruppe substituiert sein kann, oder

$R^1$ eine Alkyl-Gruppe bezeichnet, die durch eine Phenylamino-Gruppe substituiert ist, die ihrerseits durch ein Halogen-Atom und eine Halogenoalkyl-Gruppe substituiert sein kann, oder

$R^1$ eine Cyclopropyl-Gruppe, die durch eine Alkyl-Gruppe mit 1 bis 3 Kohlenstoff-Atomen oder eine Halogenoalkenyl-Gruppe mit 2 bis 3 Kohlenstoff-Atomen substituiert ist, bezeichnet,

$R^2$ ein Wasserstoff-Atom oder CN bezeichnet und

$X^1$ und $x^2$ jeweils ein Wasserstoff-Atom, ein Chlor-Atom oder ein Fluor-Atom bezeichnen;

(4) Gruppe der Carbamate der folgenden Formel

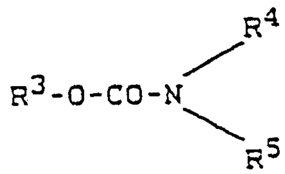

(III)

in der

$R^3$ eine Phenyl-Gruppe bezeichnet, die durch eine oder zwei gleiche oder verschiedene Alkyl-Gruppen, Alkory-Gruppen mit 1 bis 4 Kohlenstoff-Atomen oder Ethylthiomethyl-Gruppen substituiert ist, oder

$R^3$ eine Naphthyl-Gruppe, eine Pyrimidinyl-Gruppe, die durch eine Dialkylamino-Gruppe mit 1 bis 3 Kohlenstoff-Atomen und zwei Alkyl-Gruppen mit 1 bis 4 Kohlenstoff-Atomen Substituiert ist, oder eine 2, 3-Dihydrobenzofuranyl- oder Benzodioxolyl Gruppe, die durch eine Alkyl-Gruppe mit 1 bis 4 Kohlenstoff-Atomen substituiert ist, bezeichnet oder

$R^3$ eine Gruppe der allgemeinen Formel

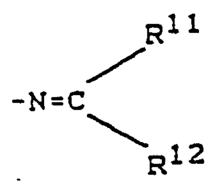

bezeichnt, in der

$R^{11}$ eine Alkyl-Gruppe mit 1 bis 4 Kohlenstoff-Atomen bezeichnet und

$R^{12}$ eine Alkylthio-Gruppe mit 1 bis 4 Kohlenstoff-Atomen bezeichnet,

$R^4$ ein Wasserstoff-Atom oder eine Alkyl-Gruppe mit 1 bis 4 Kohlenstoff-Atomen bezeichnet und

$R^5$ eine Alkyl-Gruppe mit 1 bis 4 Kohlenstoff-Atomen oder eine Gruppe der Formel

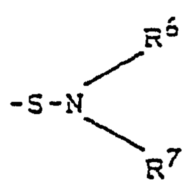

bezeichnet, in der

$R^6$ für eine Alkyl-Gruppe mit 1 bis 5 Kohlenstoff-Atomen steht und

$R^7$ für eine Alkyl-Gruppe, eine Alkoxycarbonyl-Gruppe oder eine Alkoxycarbonylalkyl-Gruppe steht, die jeweils 1 bis 5 Kohlenstoff-Atome im Alkyteil haben;

(5) Gruppe der Organophosphatester der folgenden Formel

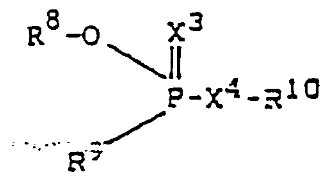

(IV)

in der

$X^3$ ein Sauerstoff- oder Schwefel-Atom bezeichnet,

$X^4$ ein Sauerstoff- oder Schwefel-Atom bezeichnet,

$R^8$ eine Alkyl-Gruppe mit 1 bis 4 Kohlenstoff-Atomen bezeichnet,

$R^9$ eine Alkoxy-Gruppe, eine Alkylthio-Gruppe oder eine Alkylcarbonylamid-Gruppe, die jeweils 1 bis 4 Kohlenstoff-Atome im Alkyl- bzw. Alkoxyteil umfassen bezeichnet,

$R^{10}$ eine durch einen oder zwei aus Halogen-Atomen und Methyl-, Methylthio-, Nitro- und Cyano-Gruppen ausgewählte Substituenten substituierte phenyl-Gruppe bezeichnet oder

$R^{10}$ eine Alkyl-Gruppe mit 1 bis 3 Kohlenstoff-Atomen bezeichnet, die gegebenenfalls durch ein Halogen-Atom, eine Alkylthio- (oder Alkylsulfinyl) -Gruppe mit 2 bis 3 Kohlenstoff-Atomen, eine Phenyl-Gruppe, eine Alkorycarbonyl-Grvppe mit 1 bis 4 Kohlenstoff-Atomen im Alkyl- bzw.Alkoxyteil, eine Alkylcarbamoyl-Gruppe mit 1 bis 4 Kohlenstoff-Atomen im Alkyl- bzw. Alkoxyteil, eine Alkylcarbamoylalkyl-($C_{1-2}$) -thioalkyl ($C_{1-2}$) -Gruppe oder eine Alkoxycarbonyl-N-methylcarbamoyl-Gruppe mit 1 bis 4 Kohlenstoff-Atomen im Alkyl- bzw. Alkylteil,eine halogen-substituierte Benzoxazol-Gruppe oder eine Alkyl-Gruppe mit 1 bis 2 Kohlenstoff-Atomen, die durch ein Halogen-Atom und eine Phthalimid-Gruppe substituiert ist, substituiert sein kann, oder

$R^{10}$ eine Alkenyl-Gruppe mit 2 bis 3 Kohlenstoff-Atomen bezeichnet, die durch ein oder zwei aus Halogen-Atomen, einer halogen-substituierten Phenyl-Gruppe und einer Alkylcarbamoyl-Gruppe ausgewählte Substituenten substituiert ist, oder

$R^{10}$ eine Pyridinyl-, Pyrimidinyl-, Pyridazinyl-, Chinoxalinyl, Isoxazolyl- oder Oxo-l,3,4-thiadiazolyl-Gruppe bezeichnet, die durch ein bis drei gleiche oder verschiedene Alkyl-Gruppen, Alkory-Gruppen, Dialkylamino-Gruppen, die sämtlich jeweils 1 bis 4 Kohlenstoff-Atome im Alkyl-bzw. Alkoxyteil umfassen, Halogen-Atome oder Phenyl-Gruppen substituiert sind, oder

$R^9$ und $R^{10}$ zusammen mit dem Phosphor-Atom und $X^4$ einen 1,3,2-Benzodioxaphosphorin-Ring bezeichnen.

2. Insektizide Mittel I nach Anspruch 1, dadurch gekennzeichnet, daß in der Wirkstoff-Kombination das Gewichtsverhältnis (1) der Nitromethylen-Verbindung zur der Verbindung der Gruppe (2) zwischen 1 : 0,05 und 1 : 10 liegt.

3. Isektizide Mittel nach Anspruch 1, dadurch gekennzeichnet, daß in der Wii rkstoff-Kombination das Gewichtsverhältnis (1) der Nitromethylen-Verbindung zur der Verbindung der Gruppe (3) zwischen 1 : 0,05 und 1 : 10 liegt.

4. Insektizide Mittel I nach Anspruch 1, dadurch gekennzeichnet, daß in der Wi rkstoff-Kombination das Gewichtsverhältnis (1) der Nitromethylen-Verbindung zur der Verbindung der Gruppe (4) zwischen 1 : 0,1 und 1 : 20 liegt.

5. Insektizide Mittel nach Anspruch 1, dadurch gekennzeichnet, daß in der Wirkstoff-Kombination das Gewichtsverhältnis (1) der Nitromethylen-Verbindung zur der Verbindung der Gruppe (5) zwischen 1 : 0,05 und 1 : 10 liegt.

6. Verfahren zur Bekämpfung von Schädlingen in Landwirtschaft und Gartenbau, dadurch gekennzeichnet, daß man eine Wirkstoff-Kombination nach den Ansprüchen 1 bis 5 auf die Schädlinge und/oder deren Lebensraum einwirken läßt.

7. Verwendung der Wirkstoff-Kombination nach den Ansprüchen 1 bis 5 zur Bekämpfung von Schädlingen in Landwirtschaft und Gartenbau.

8. Verfahren zur Herstellung von insektiziden Mitteln, dadurch gekennzeichnet, daß eine Wirkstoff-Kombination nach den Ansprüchen 1 bis 5 mit Streckmitteln und/oder grenzflächenaktiven Mitteln vermischt wird.

## Claims

1. Insecticidal agents containing

(1) a nitromethylene derivative of the formula (I)

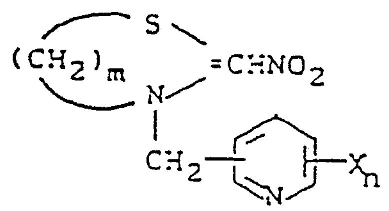

(I)

in which

X denotes a halogen atom, an alkyl group or an alkory group

n denotes 0, 1 or 2 and

m denotes 2 or 3, and

at least one insecticidal compound selected from amongst the following groups (2) to (5):

(2) group of the insecticides consisting of S,S'-2-dimethylaminotrimethylenebis (thiocarbamate), N,Ndimethyl-1,2,3-trithian-5-ylamine, 2-t-butyl-imino-3-isopropyl-5-phenyl-1, 3, 5-thiadiazinan-4-one, 1-(4-chlorophenyl)-3-(2,6-difluorobenzoyl)-urea, N-(2,6-difluorobenzoyl-N'[3,5-dichloro-4-(3-chloro-5-trifluoromethyl-2-pyridy1oxy) phenyl]-urea, 3-phenoxybenzyl 2-(4-ethoxyphenyl)-2-methylpropylether, l-(4-trifluoromethoxyphenyl)-3-(2-chlorobenzoyl)urea, 1-[4-(2-dichloro-1-difluoroethoxy) phenyl]-3- (2-chlorobenzoyl) urea, 1-(2,4-difluoro-3,5-dichlorophenyl)-3-(2,6-difluorobenzoyl)urea and N-[6-(2,2,3-trifluoro-3-chlorobenzodioxin(1,4))]-N'-(2,6-difluoro-benzoyl)urea;

(3) group of the carborylic esters of the following formula

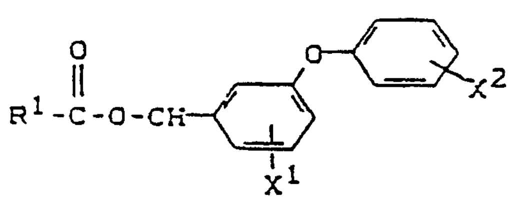

(II)

in which

$R^1$ denotes an alkyl group which is substituted by a phenyl group which, in turn, is substituted by a substituent selected from amongst halogen atoms, lower alkoxy groups and lower halogenoalkoxy groups, and where the alkyl group can furthermore be substituted by a dichlorocyclopropane group, or

$R^1$ denotes an alkyl group which is substituted by a phenylamino group which, in turn, can be substituted by a halogen atom and a halogeno-alkyl group,

$R^1$ denotes a cyclopropyl group which is substituted by an alkyl group having 1 to 3 carbon atoms, or denotes a halogenoalkenyl group having 2 to 3 carbon atoms,

$R^2$ denotes a hydrogen atom or CN and

$X^1$ and $X^2$ in each case denote a hydrogen atom, a chlorine atom or a fluorine atom;

(4) group of the carbamates of the following formula

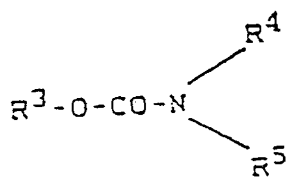

(III)

in which

$R^3$ denotes a phenyl group which is substituted by one or two identical or different alkyl groups, alkoxy groups having 1 to 4 carbon atoms or ethylthiomethyl groups, or

$R^3$ denotes a naphthyl group, a pyrimidinyl group which is substituted by a dialkylamino group having 1 to 3 carbon atoms and two alkyl groups having 1 to 4 carbon atoms, or denotes a 2,3-dihydrobenzofuranyl or benzodioxolyl group which is substituted by an alkyl group having 1 to 4 carbon atoms, or

$R^3$ denotes a group of the general formula

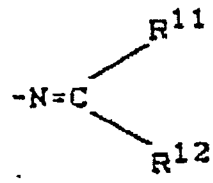

in which

$R^{11}$ denotes an alkyl group having 1 to 4 carbon atoms and

$R^{12}$ denotes an alkylthio group having 1 to 4 carbon atoms,

$R^4$ denotes a hydrogen atom or an alkyl group having 1 to 4 carbon atoms and

$R^5$ denotes an alkyl group having 1 to 4 carbon atoms or a group of the formula

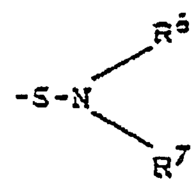

in which

$R^6$ represents an alkyl group having 1 to 5 carbon atoms and

$R^7$ represents an alkyl group, an alkoxycarbonyl group or an alkoxycarbonylalkyl group, each of which has 1 to 5 carbon atoms in the alkyl moiety;

(5) group of the organophosphoric esters of the following formula

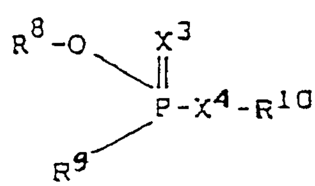

(IV)

in which

$X^3$ denotes an oxygen or sulphur atom,

$X^4$ denotes an oxygen or sulphur atom,

$R^8$ denotes an alkyl group having 1 to 4 carbon atoms,

$R^9$ denotes an alkoxy group, an alkylthio group or an allcarbonylamide group, each of which comprises 1 to 4 carbon atoms in the alkyl or alkoxy moiety,

$R^{10}$ denotes a phenyl group which is substituted by one or two substituents selected from amongst halogen atoms and methyl, methylthio, nitro and cyano groups, or

$R^{10}$ denotes an alkyl group having 1 to 3 carbon atoms which can optionally be substituted by a halogen atom, an alkylthio (or alxylsul-phinyl) group having 2 to 3 carbon atoms, a phenyl group, an alkoxycarbonyl group having 1 to 4 carbon atoms in the alkyl or alkoxy moiety, an allcarbamoyl group having 1 to 4 carbon atoms in the alkyl or alkoxy moiety, an allcarbamoylalkyl- $(C_{1-2})$thioalkyl $(C_{1-2})$ group or an alkoxycarbonyl-N-methylcarbamoyl group having 1 to 4 carbon atoms in the alkyl or alkoxy moiety, a halogen-substituted benzoxazole group or an alkyl group having 1 to 2 carbon atoms which is substituted by a halogen atom and a

phthalimide group, or
$R^{10}$ denotes an alkenyl group having 2 to 3 carbon atoms which is substituted by one or two substituents selected from amongst halogen atoms, a halogen-substituted phenyl group and an alkylcarbamoyl group or
$R^{10}$ denotes a pyridinyl, pyrimidinyl, pyridazinyl, guinoxalinyl, isoxazolyl or oxo1,3,4-thiadiazolyl group, these groups being substituted by one to three identical or different alkyl groups, alkoxy groups, dialkylamino groups, all of which comprise in each case 1 to 4 carbon atoms in the alkyl or alkoxy moiety, or by halogen atoms or by phenyl groups, or
$R^9$ and $R^{10}$ together with the phosphorus atom and $X^4$ denote a l,3,2-benzodioxaphosphorine ring.

2. Insecticidal agents according to Claim 1, characterized in that the ratio by weight (1) of the nitromethylene compound to the compound of the group (2) in the active compound combination is between 1:0.05 and 1:10.

3. Insecticidal agents according to Claim 1, characterized in that the ratio by weight (1) of the nitromethylene compound to the compound of the group (3) in the active compound combination is between 1:0.05 and 1:10.

4. Insecticidal agents according to Claim 1, characterized in that the ratio by weight (1) of the nitromethylene compound to the compound of the group (4) in the active compound combination is between 1:0.1 and 1:20.

5. Insecticidal agents according to Claim 1, characterized in that the ratio by weight (1) of the nitromethylene compound to the compound of the group (5) in the active compound combination is between 1:0.05 and 1:10.

6. Method of controlling pests in agriculture and horticulture, characterized in that an active compound combination according to Claims 1 to 5 is allowed to act on the pests and/or their environment.

7. Use of the active compound combination according to Claims 1 to 5 for controlling pests in agriculture and horticulture.

8. Process for the preparation cf insecticidal agents, characterized in that an active compound combination according to Claims 1 to 5 is mixed with extenders and/or surface-active agents.

## Revendications

1. Insecticides contenant
(1) un dérivé nitrométhylène de formule (I) :

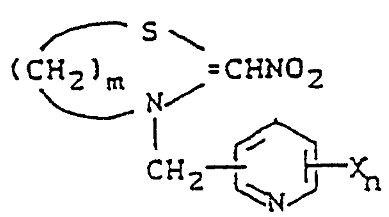

(I)

dans laquelle
x représente un atome d'halogène, un groupe alkyle ou un groupe alcoxy,
n est égal à 0, 1 ou 2 et
m est égal à 2 ou 3, et
au moins un composé insecticide choisi parmi les groupes (2) à (5) suivants :
(2) le groupe des insecticides suivants :
bis(thiocarbamate) de S,S'-2-diméthylaminotriméthylène, N,N-diméthyl-1,2,3-trithiane-5-ylamine, 2-t-butylimino-3-isopropyl-5-phény-1,3,5-thiadiazinane-4-one, 1-(4-chlorophényl)-3-(2,6-difluorobenzoyl) -urée, N-(2,6-difluorobenzoyl)-N'[3,5-dichloro-4-(3-chloro-5-trifluorométhyl-2-pyridyloxy)phényl]urée, oxyde de 3-phénoxybenzyle et de 2-(4-éthoxyphényl)-2-méthylpropyle, 1-(4-trifluorométhoxyphényl)-3-(2-chlorobenzoyl)urée, 1-[4-(2-dichloro-1-difluoroéthoxy)phényl]-3-(2-chlorobenzoyl)urée, 1-(2,4-difluoro-3,5-dichlorophényl)-3-(2,6-difluorobenzoyl)urée et N-[6-(2,2,3-trifluoro-3-chloro-benzodioxine-(1,4)]-N'-(2,6-difluorobenzoyl) urée ;

(3) le groupe des esters carboxyliques de formule suivante :

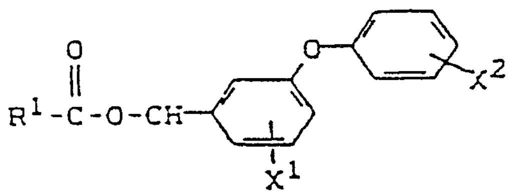

(II)

dans laquelle

$R^1$ représente un groupe alkyle qui est substitué par un groupe phényle, qui est à son tour substitué par un substituant choisi parmi les atomes d'halogènes, les groupes alcoxy inférieurs et halogénoalcoxy inférieurs, et le groupe alkyle peut encore être substitué par un groupe dichlorocyclopropane, ou bien

$R^1$ représente un groupe alkyle, qui est substitué par un groupe phénylamino, qui peut à son tour être substitué par un atome d'halogène et un groupe halogénoalkyle, ou bien

$R^1$ représente un groupe cyclopropyle qui est substitué par un groupe alkyle en $C_1$-$C_3$, ou un groupe halogénoalcényle en $C_2$-$C_3$,

$R^2$ représente un atome d'hydrogène ou un groupe CN et

$X^1$ et $X^2$ représentent chacun un atome d'hydrogène, un atome de chlore ou un atome de fluor ;

(4) le groupe des carbamates de formule suivante :

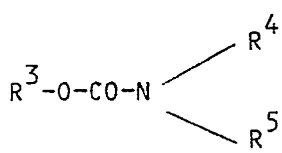

(III)

dans laquelle

$R^3$ représente un groupe phényle qui est substitué par un ou deux substituants identiques ou différents choisis parmi les groupes alkyles, alcoxy en $C_1$-$C_4$ et éthylthiométhyles, ou bien

$R^3$ représente un groupe naphtyle, un groupe pyrimidinyle, qui est substitué par un groupe di-(alkyl en $C_1$-$C_3$) amino et deux groupes alkyles en $C_1$-$C_4$, ou bien un groupe 2,3-dihydrobenzofuran-nyle ou benzodioxolyle, qui est substitué par un groupe alkyle en $C_1$-$C_4$, ou bien

$R^3$ représente un groupe de formule générale :

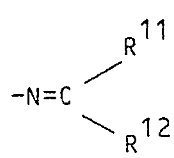

dans laquelle

$R^{11}$ représente un groupe alkyle en $C_1$ -$C_4$ et

$R^{12}$ représente un groupe alkylthio en $C_1$-$C_4$,

$R^4$ représente un atome d'hydrogène ou un groupe alkyle en C -$C_4$ et

$R^5$ représente un groupe alkyle en $C_1$-$C_4$ ou un groupe de formule :

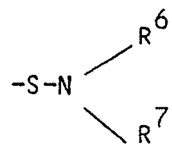

dans laquelle

$R^6$ représente un groupe alkyle en $C_1$ -$C_5$ et

$R^7$ représente un groupe alkyle, un groupe alcoxycarbonyle ou un groupe alcoxycarbonylalkyle ayant à chaque fois 1 à 5 atomes de carbone dans la portion alkyle ;

(5) le groupe des esters organophosphates de formule suivante :

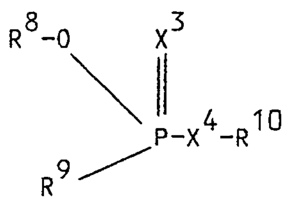

(IV)

dans laquelle

$x^3$ représente un atome d'oxygène ou de soufre,

$x^4$ représente un atome d'oxygène ou de soufre,

$R^8$ représente un groupe alkyle en $C_1$ -$C_4$,

$R^9$ représente un groupe alcoxy, alkylthio, un groupe alkylcarbonylamido, ayant chaque fois 1 à 4 atomes de carbone dans la portion alkyle ou alcoxy,

$R^{10}$ représente un groupe phényle substitué par un ou deux substituants choisis parmi les atomes d'halogènes et les groupes méthyle, méthylthio, nitro et cyano ou bien

$R^{10}$ représente un groupe alkyle en $C_1$-$C_3$ qui peut éven-tuellement être substitué par un atome d'halogène, un groupe alkylthio (ou alkylsulfinyle) en $C_2$-$C_3$, un groupe phényle, un groupe alcoxycarbonyle ayant 1 à 4 atomes de carbone dans la portion alkyle ou alcoxy, un groupe alkylcarbamoyle ayant 1 à 4 atomes de carbone dans la portion alkyle ou alcoxy, un groupe alkylcarbamoyl(alkyl en $C_1$-$C_2$)-thioalkyle (en $C_1$ -$C_2$) ou un groupe alcoxycarbonyl-N-méthylcarbamoyle ayant 1 à 4 atomes de carbone dans la portion alkyle ou alcoxy, un groupe benzoxazole halogéno substitué ou un groupe alkyle en $C_1$ -$C_2$, qui est substitué par un atome d'halogène et un groupe phtalimido, ou bien

$R^{10}$ représente un groupe alcényle en $C_2$-$C_3$ qui est subs-titué par un ou deux substituants qui sont choisis parmi les atomes d'halogènes, un groupe phényle halogéno-substitué et un groupe alkylcarbamoyle, ou bien

$R^{10}$ représente un groupe pyridinyle, pyrimidinyle, pyridazinyle, quinoxalinyle, isoxazolyle ou oxo-1,3,4-thiadiazolyle, qui sont substitués par un à trois substituants identiques ou différents choisis parmi les groupes alkyles, les groupes alcoxy, les groupes dialkylamino, qui comprennent tous chaque fois 1 à 4 atomes de carbone dans la portion alkyle ou alcoxy, les atomes d'halogènes ou les groupes phényles, ou bien

$R^9$ et $R^{10}$ pris ensemble avec l'atome de phosphore et $X^4$ représentent un noyau 1,3,2-benzodioxaphosphorine.

2. Insecticides selon la revendication 1, caractérisés en ce que le rapport pondéral du composé nitrométhylène (1) au composé du groupe (2) dans la combinaison de substances actives est compris entre 1 : 0,05 et 1 : 10.

3. Insecticides selon la revendication 1, caractérisés en ce que le rapport pondéral du composé nitrométhylène (1) au composé du groupe (3) dans la combinaison de substances actives est compris entre 1 : 0,05 et 1 : 10.

4. Insecticides selon la revendication 1, caractérisés en ce que le rapport pondéral du composé nitrométhylène (1) ou composé du groupe (4) dans la combinaison de substances actives est compris

entre 1 : 0,1 et 1 : 20.

5. Insecticides selon la revendication 1, caractèrisés en ce que le rapport pondéral du composé nitrométhylêne (1) au composé du groupe (5) dans la combinaison de substances actives est compris entre 1 : 0,05 et 1 : 10.

6. Procédé pour la lutte contre les parasites en agriculture et en horticulture, caractérisé en ce que l'on fait agir sur les parasites et/ou leur habitat une combinaison de substances actives selon les revendications 1 à 5.

7. Utilisation de la combinaison de substances actives selon les revendications 1 à 5, pour la lutte contre les parasites en agriculture et en horticulture.

8. Procédé pour la fabrication d'insecticides, caractérisé en ce que l'on mélange une combinaison de substances actives selon les revendications 1 à 5 avec des diluants et/ou des agents tensioactifs.